(19) Europäisches Patentamt
European Patent Office
Office européen des brevets

(11) EP 3 290 469 A1

(12) # EUROPÄISCHE PATENTANMELDUNG

(43) Veröffentlichungstag:
**07.03.2018 Patentblatt 2018/10**

(51) Int Cl.:
***C08K 5/3492*** *(2006.01)* ***C08K 5/52*** *(2006.01)*
***C08K 5/5313*** *(2006.01)*

(21) Anmeldenummer: **16186758.5**

(22) Anmeldetag: **01.09.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **LANXESS Deutschland GmbH**
**50569 Köln (DE)**

(72) Erfinder:
- **ENDTNER, Jochen**
  **50679 Köln (DE)**
- **BIENMÜLLER, Matthias**
  **47803 Krefeld (DE)**

(54) **THERMOPLASTISCHE FORMMASSEN**

(57) Die Erfindung betrifft Zusammensetzungen sowie daraus herzustellende Formmassen und darauf wiederum basierende Erzeugnisse enthaltend wenigstens einen Polyester aus der Gruppe der Polyalkylentherephthalate oder Polycycloalkylenterephthalate, wenigstens ein organisches Phosphinsäuresalz, wenigstens ein kondensiertes Melamin-Derivat und wenigstens ein anorganisches Phosphatsalz.

EP 3 290 469 A1

## Beschreibung

Die Erfindung betrifft Zusammensetzungen sowie daraus herzustellende Formmassen und darauf wiederum basierende Erzeugnisse enthaltend wenigstens einen Polyester aus der Gruppe der Polyalkylentherephthalate oder Polycycloalkylenterephthalate, wenigstens ein organisches Phosphinsäuresalz, wenigstens ein kondensiertes Melamin-Derivat und wenigstens ein anorganisches Phosphatsalz.

## Stand der Technik

Nicht zuletzt aufgrund ihrer guten elektrischen Kennwerte z. B. hinsichtlich Durchschlagfestigkeit und spezifischem Durchgangswiderstand sind Polyester beliebte Materialien in Elektronik- und Elektroanwendungen. Aufgrund der Gefahr von Brandentstehung in der Nähe von stromführenden Teilen werden häufig flammwidrig ausgestattete Materialien eingesetzt. Je nach Anwendungsgebiet sind dabei nicht nur eine gute Selbstverlöschung in Form einer UL94 V-0 Klassifizierung **(**Underwriters Laboratories Inc. Standard of Safety, "Test for Flammability of Plastic Materials for Parts in Devices and Appliances", S. 14 bis S. 18 Northbrook 1998**),** sondern auch eine geringe Entzündlichkeit gefragt. So wird beispielsweise in der IEC60335-1 für Komponenten in unbeaufsichtigten Haushaltsgeräten, die sich innerhalb von 3mm Abstand zu stromführenden Teilen mit Strömen >0,2A befinden, eine Glühdrahtprüfung nach IEC60695-2-11 am Fertigteil vorgeschrieben, wobei es bei einer Glühdrahttemperatur von 750°C keine Flammerscheinung von mehr als 2 Sekunden geben darf. Die Erfahrung zeigt, dass Prüfergebnisse am Fertigteil aufgrund der undefinierten Geometrie von Fertigteilen oder auch den Wärmefluss beeinträchtigende Metallkontakte nicht direkt mit Prüfergebnissen übereinstimmen, die gemäß IEC60695-2-13 an einer definierten Rundplatte bei gleicher Glühdrahttemperatur durchgeführt wurden, zumal nach IEC60695-2-13 ein Probekörper auch dann noch als "nicht entzündet" betrachtet wird, wenn er eine Flammerscheinung kleiner als 5 Sekunden zeigt.

Um sicher zu stellen, dass ein Material auch am Fertigteil und unabhängig von der Geometrie auch bei 750°C Glühdrahttemperatur keine Flamme mit einer Brennzeit länger als 2 Sekunden zeigt, besteht zunehmend der Wunsch nach Materialien, die bei einer Plattenprüfung nach IEC60695-2-13 einen größeren Sicherheitspuffer aufweisen, d.h. dass über die Normanforderungen hinaus, auch bei deutlich höheren Glühdrahttemperaturen als 750°C, noch keine Entflammung stattfindet, wobei "keine Entflammung" dabei nicht gemäß IEC60695-2-13 als Flammerscheinung <5 Sekunden, sondern im wörtlichen Sinn als gar keine Flamme, d.h. als Brennzeit von 0 Sekunden interpretiert wird. Um dabei die variablen Dicken der Fertigteile zu berücksichtigen, soll dies idealerweise sowohl an Prüfplatten mit mindestens 3mm Wandstärke, als auch an dünnen Prüfplatten mit maximal 0,75mm Wandstärke erfüllt werden.

Hinzu kommt, dass in jüngster Zeit, nicht zuletzt aus ökologischen Gründen, hinsichtlich des Flammschutzes zunehmend halogenfreie Lösungen eingefordert werden. Wichtig ist dabei allerdings, dass beim Einsatz halogenfreier Flammschutzmittel, bei denen es sich nicht selten um nicht aufschmelzbare Feststoffe handelt, andere für den Einsatz in Anwendungen wichtige Eigenschaften nicht außer Acht gelassen werden. Hierzu zählt insbesondere eine hinreichende mechanische Performance und die weitestgehende Vermeidung von thermischem Abbau des Polymersystems durch Wechselwirkungen mit dem halogenfreien Flammschutzpaket.

In DE 112007001618 T5 werden Polybutylenterephthalat (PBT) basierte Zusammensetzungen auf Basis halogenhaltiger Flammschutzmittel beschrieben, bei denen die Glühdrahtbeständigkeit GWIT nach IEC 60695-2-13 bei 0,75mm Wandstärke bis zu einem Wert von 825°C verbessert werden konnte, wenn man 1 bis 100 Massenanteile einer Stickstoff-haltigen Verbindung hinzu gibt. Neben exemplarisch aufgeführtem Melamincyanurat wird als Beispiel für stickstoffhaltige Verbindungen auch Melem aufgeführt, ohne aber speziell auf dessen Wirkung hinsichtlich Glühdrahtentzündlichkeit und Mechanik in Zusammensetzungen mit halogenfreien Flammschutzmitteln einzugehen.

In EP 2 927 279 A1 sind Zusammensetzungen enthaltend PBT, Phosphinsäuresalze, >4 Gew.-% einer Phosphazenverbindung und stickstoffhaltige zyklische Verbindungen beschrieben, die eine Glühdrahtbeständigkeit GWIT nach IEC60695-2-13 an Platten unterschiedlicher Dicke von mindestens 775°C erreichen. In EP 2 927 279 A1 wird bei der Beschreibung der Beispiele für die stickstoffhaltigen zyklischen Verbindungen auch Melem genannt. Allerdings finden sich keine Hinweise auf GWIT-Werte oberhalb von 800°C oder Möglichkeiten, Zusammensetzungen enthaltend Melem dahingehend zu stabilisieren, dass keine wesentlichen Einbußen in den mechanischen Eigenschaften hingenommen werden müssen.

DE 11 2006 001 824 T5 beschreibt flammhemmende Harzzusammensetzungen mit halogenhaltigen Flammschutzmitteln. Beispiel 17 enthält Polybutylenterephthalat (PBT), Polyethylenterephthalat (PET), ein bromhaltiges Flammschutzmittel, sowie Calciumdihydrogenphosphat als Wärmestabilisator.

Aus WO 01/94472 A1 sind flammhemmende Harzzusammensetzungen unter anderem auf Basis von Polyethylenterephthalat und Polybutylenterephthalat bekannt (Beispiele 28 - 30), bei denen als Flammschutzmittel Aluminium(methylethylphosphinat), im Beispiel 29 in Kombination mit Melaminpolyphosphat als stickstoffhaltiger Verbindung, sowie zusätzlich Calciumhydrogenphosphat eingesetzt wird, jedoch ohne konkret auf das Glühdrahtentzündungsverhalten oder mechanische Eigenschaften einzugehen.

Aufgabe der vorliegenden Erfindung war es daher, flammgeschützte Zusammensetzungen sowie daraus herzustellende Formmassen bzw. Erzeugnisse auf Basis wenigstens eines Polyalkylenterephthalats und/oder Polycycloalkylenterephthalats bereit zu stellen, die bei Wandstärken ≥ 0,75mm in der Glühdrahtprüfung nach IEC60695-2-13 auch bei Glühdrahttemperaturen von ≥ 800°C keine Entzündung zeigen und durch die Additivierung mit entsprechenden Flammschutzmitteln keine wesentlichen Auswirkungen auf die Mechanik haben. Des Weiteren sollte die Additivierung zu einem möglichst geringen thermischen Abbau des als Polymer eingesetzten Polyalkylenterephthalats und/oder Polycycloalkylenterephthalats führen.

Keine Entzündung im Glühdrahttest soll dabei so verstanden werden, dass es keine Flamme gibt, die Brennzeit der Flamme also 0 Sekunden ist.

Keine wesentlichen Auswirkungen auf die Mechanik soll erfindungsgemäß so verstanden werden, dass das mechanische Niveau durch Einsatz von entzündlichkeitshemmenden Additiven nicht wesentlich unter das Niveau von Zusammensetzungen ohne entsprechende entzündlichkeitshemmende Additive abfällt, wobei das mechanische Niveau anhand der Biegefestigkeit in Anlehnung an ISO 178 und der Schlagzähigkeit nach IZOD in Anlehnung an ISO 180-1 U bewertet wird. Als Maß für den thermischen Abbau des eingesetzten Polymers ("Kettenabbau") wird die MVR gemäß ISO 1133 herangezogen.

**Erfindung**

Lösung der Aufgabe und Gegenstand der Erfindung sind Zusammensetzungen, Formmassen und Erzeugnisse enthaltend

A) wenigstens ein Polyalkylenterephthalat oder Polycycloalkylenterephthalat,

B) wenigstens ein organisches Phosphinsäuresalz der Formel (I) und/oder wenigstens ein organisches Diphosphinsäuresalz der Formel (II) und/oder deren Polymere,

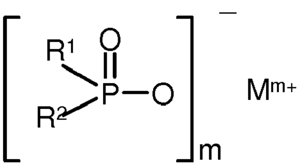 (I)

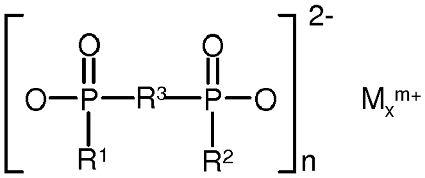 (II)

worin

$R^1$, $R^2$ gleich oder verschieden sind und jeweils für ein lineares oder verzweigtes $C_1$-$C_6$-Alkyl, und/oder für $C_6$-$C_{14}$-Aryl stehen,

$R^3$ für lineares oder verzweigtes $C_1$-$C_{10}$-Alkylen, $C_6$-$C_{10}$-Arylen oder für $C_1$-$C_6$-Alkyl-$C_6$-$C_{10}$-arylen oder $C_6$-$C_{10}$-Aryl-$C_1$-$C_6$-alkylen steht,

M für Aluminium, Zink oder Titan steht,

m für eine ganze Zahl im Bereich von 1 bis 4 steht;

n für eine ganze Zahl im Bereich von 1 bis 3 steht, und

x für 1 oder 2 steht,

wobei n, x und m in Formel (II) gleichzeitig nur solche ganzen Zahlen annehmen können, dass das Diphosphinsäuresalz der Formel (II) als Ganzes ungeladen ist,

C) wenigstens ein kondensiertes Melamin-Derivat und

D) wenigstens ein anorganisches Phosphatsalz aus der Gruppe der Metallhydrogenphosphate, der Metalldihydrogenphosphate, der Metalldihydrogenpyrophosphate und/oder der Metallpyrophosphate, wobei Metall für Natrium, Kalium, Magnesium, Zink, Kupfer und/oder Aluminium steht.

Überraschenderweise zeigen auf den erfindungsgemäßen Zusammensetzungen basierende Erzeugnisse gegenüber dem Stand der Technik sehr hohe Glühdrahtentzündlichkeitswerte, ohne dabei Nachteile bei den mechanischen Eigenschaften zu zeigen und ohne dabei einen höheren Kettenabbau im Polymer (Komponente A)) aufzuweisen. Bei Verwendung einer Kombination von Komponente C) und Komponente D) können somit in durch Komponente B) flammgeschützten Polyestern der Komponente A) sowohl hohe GWIT Werte, als auch gleichzeitig hohe thermische Stabilität, belegt durch hohe Werte bei der Biegefestigkeit und der Schlagzähigkeit, erzielt werden. Fehlt mindestens eine der beiden Komponenten C) und / oder D), so fallen entweder die mechanischen Kennwerte ab, oder aber die Flammschutzwirkung wird reduziert, was im Beispielteil durch entsprechende Versuche belegt wird.

Zur Klarstellung sei angemerkt, dass im Rahmen dieser Erfindung alle nachfolgend aufgeführten, allgemeinen oder in Vorzugsbereichen genannten Definitionen und Parameter in beliebigen Kombinationen umfasst sind. Zitierte Normen gelten in ihrer zum Anmeldetag dieser Erfindung gültigen Fassung.

Ferner sei zur Klarstellung angemerkt, dass die Biegefestigkeit in der technischen Mechanik ein Wert für eine Biegespannung in einem auf Biegung beanspruchten Bauteil ist, bei dessen Überschreiten das Versagen durch Bruch des Bauteils eintritt. Sie beschreibt den Widerstand eines Werkstückes, welcher seiner Durchbiegung oder seinem Bruch entgegengesetzt wird. Im Kurzeit-Biegeversuch nach ISO 178 werden balkenförmige Probekörper, hier mit den Abmessungen 80 mm • 10 mm • 4,0 mm, an den Enden auf zwei Aufleger gelegt und in der Mitte mit einem Biegestempel belastet **(**Bodo Carlowitz: Tabellarische Übersicht über die Prüfung von Kunststoffen, 6. Auflage, Giesel-Verlag für Publizität, 1992, S. 16-17**).**

Gemäß "http://de.wikipedia.org/wiki/Biegeversuch" wird das Biegemodul im 3-Punkt-Biegeversuch ermittelt, wobei eine Prüfprobe auf zwei Auflagen positioniert und in der Mitte mit einem Prüfstempel belastet wird. Der Biegemodul berechnet sich gemäß Formel (III) bei einer Flachprobe dann wie folgt:

$$E = l_v^3 (X_H - X_L) / 4\, D_L b a^3 \qquad \text{(III)}$$

mit $E$ = Biegemodul in kN/mm$^2$; $l_V$ = Stützweite in mm; $X_H$ = Ende der Biegemodulermittlung in kN; $X_L$ = Beginn der Biegemodulermittlung in kN; $D_L$ = Durchbiegung in mm zwischen $X_H$ und $X_L$; $b$ = Probenbreite in mm; $a$ = Probendicke in mm.

Die Schlagzähigkeit beschreibt die Fähigkeit eines Werkstoffes, Stoßenergie und Schlagenergie zu absorbieren, ohne zu brechen. Die Schlagzähigkeit wird berechnet als das Verhältnis aus Schlagarbeit und Probekörperquerschnitt (Maßeinheit kJ/m$^2$). Durch verschiedene Arten des Kerbschlagbiegeversuchs (Charpy, Izod) kann die Schlagzähigkeit bestimmt werden. Im Unterschied zur Kerbschlagzähigkeit wird bei der Schlagzähigkeit der Probekörper nicht eingekerbt. Die Izod Schlagzähigkeit wurde im Rahmen der vorliegenden Erfindung nach ISO 180-1 U an spritzfrischen Probekörpern der Abmessung 80 mm • 10 mm • 4 mm bestimmt.

Die Schmelze-Volumenfließrate (engl. MVR = *Melt Volume-flow Rate* oder ehemals und bis heute oft umgangssprachlich als *Melt Volume Rate* oder MVI = *Melt Volume Index* bezeichnet) dient zur Charakterisierung des Fließverhaltens (Formmassenprüfung) eines Thermoplasten bei bestimmten Druck- und Temperaturbedingungen. Die Bestimmung der Schmelze-Massefließrate erfolgt analog der Schmelze-Volumenfließrate und unterscheidet sich im Messergebnis durch die Schmelzedichte. Die MVR ist ein Maß für die Viskosität einer Kunststoffschmelze. Bei gleicher Ausgangsviskosität des eingesetzten Polymers kann der MVR-Wert auch als Maß für den Polymerabbau während eines Verarbeitungsschrittes betrachtet werden. Ein erhöhter MVR-Wert seht dann für eine niedrigere Viskosität der Schmelze und lässt so auf einen stärkeren Abbau des Polymers schließen.

Die MVR nach ISO 1133 wird im Rahmen der vorliegenden Erfindung mittels eines Kapillarrheometers ermittelt, wobei das Material (Granulat oder Pulver) in einem beheizbaren Zylinder aufgeschmolzen und unter einem durch die Auflagelast entstehenden Druck durch eine definierte Düse (Kapillare) gedrückt wird. Ermittelt wird das austretende Volumen bzw. Masse der Polymerschmelze (des sogenannten Extrudats) als Funktion der Zeit. Ein wesentlicher Vorteil der Schmelze-Volumenfließrate liegt in der einfachen Messung des Kolbenwegs bei bekanntem Kolbendurchmesser zur Bestimmung des ausgetretenen Schmelzevolumens. Es gilt: MVR = Volumen/10min. Die Einheit für den MVR ist *cm$^3$/10min.*

"Alkyl" bezeichnet im Rahmen der vorliegenden Erfindung eine geradkettige oder verzweigte gesättigte Kohlenwasserstoffgruppe. In einigen Ausführungsformen wird eine Alkylgruppe mit 1 bis 6 Kohlenstoffatomen eingesetzt. Diese kann als eine "Niederalkylgruppe" bezeichnet werden. Bevorzugte Alkylgruppen sind Methyl (Me), Ethyl (Et), Propyl, insbesondere n-Propyl und iso-Propyl, Butyl, insbesondere n-Butyl, iso-Butyl, sec-Butyl, tert-Butyl, Pentyl-Gruppen, insbesondere n-Pentyl, iso-Pentyl, neo-Pentyl, Hexylgruppen und dergleichen. Entsprechendes gilt für den Begriff Polyalkylen.

"Aryl" bezeichnet im Rahmen der vorliegenden Erfindung ein monocyclisches aromatisches Kohlenwasserstoff-Ringsystem oder ein polycyclisches Ringsystem, in dem zwei oder mehrere aromatische Kohlenwasserstoff-Ringe

kondensiert sind, oder wenigstens einen aromatischen monocyclischen Kohlenwasserstoffring, der mit einem oder mehreren Cycloalkyl- und/oder Cycloheteroalkylringen fusioniert ist. In erfindungsgemäßen Ausführungsformen ist Aryl oder Arylen eine Arylgruppe mit 6 bis 14 Kohlenstoffatomen. Bevorzugte Arylgruppen mit einem aromatischen carbocyclischen Ringsystem sind Phenyl, 1-Naphthyl (bicyclisch), 2-Naphthyl (bicyclisch), Anthracenyl (tricyclisch), Phenanthrenyl (tricyclisch), Pentacenyl (fünfcyclisch) und ähnliche Gruppen. Andere bevorzugte Arylgruppen sind Benzodioxanyl, Benzodioxolyl, Chromanyl, Indolinyl-Gruppen und dergleichen. In einigen Ausführungsformen können Arylgruppen, wie hierin beschrieben, substituiert sein. In einigen Ausführungsformen kann eine Arylgruppe einen oder mehrere Substituenten aufweisen.

"Alkylaryl" im Sinne der vorliegenden Erfindung bedeutet eine Alkyl-Aryl-Gruppe, wobei die Alkylaryl-Gruppe kovalent an die definierte chemische Struktur durch die Alkylgruppe gebunden ist. Eine erfindungsgemäß bevorzugte Alkylarylgruppe ist die Benzyl-Gruppe ($-CH_2-C_6H_5$). Alkylarylgruppen gemäß der vorliegenden Erfindung können wahlweise substituiert sein, das heißt, entweder die Arylgruppe und/oder die Alkyl-Gruppe kann substituiert sein. Im Gegensatz dazu bedeutet "Arylalkyl" im Sinne der vorliegenden Erfindung eine Aryl-Alkyl-Gruppe, wobei die Arylalkyl-Gruppe kovalent an die definierte chemische Struktur durch die Arylgruppe gebunden ist.

Bezüglich der d50 und d97-Werte in dieser Anmeldung, ihrer Bestimmung und ihrer Bedeutung sei auf Chemie Ingenieur Technik (72) S. 273-276, 3/2000, Wiley-VCH Verlags GmbH, Weinheim, 2000 verwiesen, wonach der d50-Wert diejenige Partikelgröße ist, unterhalb derer 50% der Partikelmenge liegen (Medianwert) und der d97-Wert diejenige Partikelgröße ist, unterhalb derer 97% der Partikelmenge liegen.

Angaben zur Teilchengrößenverteilung bzw. zu Teilchengrößen beziehen sich im Rahmen der vorliegenden Erfindung auf sogenannte oberflächenbasierte Teilchengrößen, jeweils vor Einarbeitung in Formmassen. Die Teilchengrößenbestimmung erfolgt im Rahmen der vorliegenden Erfindung durch Laserdiffraktometrie, siehe C.M. Keck, Moderne Pharmazeutische Technologie 2009, Freie Universität Berlin, Kapitel 3.1. oder QUANTACHROME PARTIKELWELT NO 6, Juni 2007, Seiten 1 bis 16**.** Die zugrunde liegende Norm ist ISO 13317-3.

Vorzugsweise betrifft die Erfindung Zusammensetzungen, Formmassen und Erzeugnisse enthaltend bezogen auf 100 Massenanteile der Komponente A)

10 bis 70 Massenanteile der Komponente B),

1 bis 30 Massenanteile der Komponente C) und

0,01 bis 5 Massenanteile der Komponente D).

In einer Ausführungsform enthalten die erfindungsgemäßen Zusammensetzungen, Formmassen und Erzeugnisse zusätzlich zu den Komponenten A) bis D) noch **E)** wenigstens ein von Komponente C) verschiedenes **Melaminderivat,** vorzugsweise in Mengen im Bereich von 2 bis 50 Massenanteilen, bezogen auf 100 Massenanteile der Komponente A).

In einer Ausführungsform enthalten die erfindungsgemäßen Zusammensetzungen, Formmassen und Erzeugnisse zusätzlich zu den Komponenten A) bis E) oder anstelle von E) noch **F)** wenigstens ein **Metallsulfat,** vorzugsweise in Mengen im Bereich von 1 bis 40 Massenanteilen, bezogen auf 100 Massenanteile der Komponente A).

In einer Ausführungsform enthalten die erfindungsgemäßen Zusammensetzungen, Formmassen und Erzeugnisse zusätzlich zu den Komponenten A) bis F) oder anstelle von E) und/oder F) noch **G)** wenigstens einen von den Komponenten B) bis F) verschiedenen **Füllstoff oder Verstärkungsstoff,** vorzugsweise in Mengen im Bereich von 0,1 bis 300 Massenanteilen, bezogen auf 100 Massenanteile der Komponente A).

In einer Ausführungsform enthalten die erfindungsgemäßen Zusammensetzungen, Formmassen und Erzeugnisse zusätzlich zu den Komponenten A) bis G) oder anstelle von E) und/oder F) und/oder G) noch **H)** wenigstens ein weiteres von den Komponenten B) bis G) verschiedenes **Additiv,** vorzugsweise in Mengen im Bereich von 0,01 bis 80 Massenanteilen, bezogen auf 100 Massenanteile der Komponente A).

Erfindungsgemäß können die Komponenten E), F), G) und H) in den Zusammensetzungen, Formmassen und Erzeugnissen vorhanden sein, sie können aber auch nicht vorhanden sein. Vorzugsweise ergeben sich für die Zusammensetzungen, Formmassen und Erzeugnisse folgende Kombinationen der Komponenten: A), B), C), D); A), B), C), D), E); A), B), C), D), F); A), B), C), D), G); A), B), C), D), H); A), B), C), D), E), F); A), B), C), D), E), G); A), B), C), D), E), H); A), B), C), D), E), F), G); A), B), C), D), E), F), H); A), B), C), D), E), F), G), H).

Die erfindungsgemäßen Zusammensetzungen, die in der Kunststofftechnik zusammenfassend auch als Formmassen bezeichnet werden, fallen bei der Bearbeitung der Komponenten A) bis D) sowie ggf. zusätzlich noch wenigstens eine der Komponenten E), F), G) oder H) vorzugsweise als Granulat, in Strangform oder als Pulver an. Die Zubereitung erfolgt durch Mischen der erfindungsgemäßen Zusammensetzungen in wenigstens einem Mischwerkzeug, vorzugsweise einem Compounder, besonders bevorzugt einem gleichsinnig drehenden Zweiwellenextruder. Der Mischvorgang der Komponenten A) bis E), sowie gegebenenfalls wenigstens einer weiteren Komponente E) und / oder F) und / oder G)

und / oder H) zur Herstellung erfindungsgemäßer Zusammensetzungen in Form von Pulvern, Granulaten oder in Strangform wird in der Kunststofftechnik auch als Compoundierung bezeichnet. Hierdurch werden als Zwischenprodukte, auf den erfindungsgemäßen Zusammensetzungen basierende, Formmassen erhalten. Diese Formmassen - auch als thermoplastische Formmassen bezeichnet - können entweder ausschließlich aus den Komponenten A) bis D) bestehen, oder aber zusätzlich zu den Komponenten A) bis D) noch weitere Komponenten enthalten, vorzugsweise wenigstens eine der Komponenten E) und / oder F) und / oder G) und/ oder H). In einem weiteren Schritt werden die erfindungsgemäßen Formmassen dann als Matrixmaterial einem Spritzguss oder einer Extrusion, bevorzugt einem Spritzguss, unterzogen, um daraus erfindungsgemäße Erzeugnisse herzustellen. Erfindungsgemäße Erzeugnisse enthalten deshalb dieselben Komponenten A) bis D) sowie ggf. zusätzlich noch wenigstens eine der KomponentenE), F), G) oder H).

**Komponente A)**

Die erfindungsgemäß als Komponente A) einzusetzenden Polyalkylenterephthalate oder Polycycloalkylenterephthalate können nach verschiedenen Verfahren hergestellt werden, aus unterschiedlichen Bausteinen synthetisiert werden und im speziellen Anwendungsfall allein oder in Kombination mit Verarbeitungshilfsmitteln, Stabilisatoren, polymeren Legierungspartnern (z. B. Elastomeren) oder auch Verstärkungsmaterialien (wie z. B. mineralischen Füllstoffen oder Glasfasern) und gegebenenfalls weiteren Additiven, zu Werkstoffen mit speziell eingestellten Eigenschaftskombinationen ausgerüstet werden. Geeignet sind auch Blends mit Anteilen von anderen Polymeren, wobei gegebenenfalls ein oder mehrere Kompatibilisatoren eingesetzt werden können. Die Eigenschaften der Polymere können nach Bedarf durch Zusatz von Elastomeren verbessert werden.

Bevorzugte als Komponente A) einzusetzende Polyalkylenterephthalate oder Polycycloalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen **(**Kunststoff-Handbuch, Bd. VIII, S. 695 ff, Karl Hanser Verlag, München 1973**).**

Bevorzugt als Komponente A) einzusetzende Polyalkylenterephthalate oder Polycycloalkylenterephthalate enthalten mindestens 80Mol-%, vorzugsweise mindestens 90Mol-%, bezogen auf die Dicarbonsäure, Terephthalsäurereste und mindestens 80Mol-%, vorzugsweise mindestens 90Mol-%, bezogen auf die Diolkomponente, 1,4-Cyclohexandimethanol- und/oder Ethylenglykol- und/oder Propandiol-1,3- (im Falle von Polypropylenterephthalat) und/oder Butandiol-1,4-reste.

Bevorzugt als Komponente A) einzusetzende Polyalkylenterephthalate oder Polycycloalkylenterephthalate können neben Terephthalsäureresten bis zu 20Mol-% Reste anderer aromatischer Dicarbonsäuren mit 8 bis 14 C-Atomen oder Reste aliphatischer Dicarbonsäuren mit 4 bis 12 C-Atomen enthalten, insbesondere Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure, Cyclohexandicarbonsäure.

Bevorzugt als Komponente A) einzusetzende Polyalkylenterephthalate oder Polycycloalkylenterephthalate können neben 1,4-Cyclohexandimethanol bzw. Ethylenglykol bzw. 1,3-Propandiol bzw. 1,4-Butandiol-1,4 bis zu 20Mol-% andere aliphatische Diole mit 3 bis 12 C-Atomen oder bis zu 20Mol-% cycloaliphatische Diole mit 6 bis 21 C-Atomen enthalten, bevorzugt Reste von Propandiol-1,3, 2-Ethylpropandiol-1,3, Neopentylglykol, Pentan-diol-1,5, Hexandiol-1.6, 3-Methylpentandiol-2,4, 2-Methylpentandiol-2,4, 2,2,4-Trimethylpentandiol-1,3, 2,2,4-Trimethylpentandiol-1,5, 2-Ethylhexandiol-1,3, 2,2-Diethylpropandiol-1,3, Hexandiol-2,5, I,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-β-hydroxyethoxyphenyl)-propan und 2,2-bis-(4-hydroxypropoxyphenyl)-propan.

Besonders bevorzugt sind als Komponente A) Polyalkylenterephthalate oder Polycycloalkylenterephthalate, die allein aus Terephthalsäure und deren reaktionsfähigen Derivaten, insbesondere deren Dialkylestern, und 1,4-Cyclohexandimethanol und/oder Ethylenglykol und/oder 1,3-Propandiol und/oder 1,4-Butandiol hergestellt werden, insbesondere bevorzugt Poly-1,4-cyclohexandimethanolterephthalat, Polyethylenterephthalat und Polybutylenterephthalat und Mischungen derselben.

Dabei kann es sich bei den als Komponente A) einzusetzendem Polyethylenterephthalat auch um Rezyklat handeln. Unter Rezyklaten versteht man im Allgemeinen:

1) sogenanntes Post Industrial Rezyklat (auch Pre Consumer Rezyklat genannt): hierbei handelt es sich um Produktionsabfälle bei der Polykondensation, bei der Compoundierung (z. B. offspec-Ware) oder bei der Verarbeitung z. B. Angüsse bei der Spritzgussverarbeitung, Anfahrware bei der Spritzgussverarbeitung oder Extrusion oder Rand-Abschnitte von extrudierten Platten oder Folien.

2) Post Consumer Rezyklat: hierbei handelt es sich um Kunststoffartikel, die nach der Nutzung durch den Endverbraucher gesammelt und aufbereitet werden. Der mengenmäßig bei weitem dominierende Artikel sind blasgeformte PET-Flaschen für Mineralwasser, Softdrinks und Säfte.

Erfindungsgemäß bevorzugt als Komponente A) einzusetzende PET-Rezyklate aus zu recyclierten PET-Flaschen werden bevorzugt nach einem Verfahren gemäß DE 103 24 098 A1, WO 2004/009315 A1 oder nach WO 2007/116022 A2 erhalten.

Bevorzugt als Komponente A) einzusetzende Polyalkylenterephthalate oder Polycycloalkylenterephthalate sind auch Copolyester, die aus mindestens zwei der obengenannten Säurekomponenten und/oder aus mindestens zwei der obengenannten Alkoholkomponenten hergestellt werden. Besonders bevorzugte Copolyester sind Poly-(ethylenglykol/butandiol-1,4)-terephthalate.

Die als Komponente A) einzusetzenden Polyalkylenterephthalate oder Polycycloalkylenterephthalate besitzen vorzugsweise eine intrinsische Viskosität im Bereich von 30 bis 150 $cm^3/g$, besonders bevorzugt im Bereich von 40 bis 130 $cm^3/g$, ganz besonders bevorzugt im Bereich von 50 bis 100 $cm^3/g$ jeweils gemessen in Phenol/o-Dichlorbenzol (1:1 Gew.-Teile) bei 25°C. Die intrinsische Viskosität IV, auch als Staudinger-Index oder Grenzviskosität bezeichnet, ist nach der Mark-Houwink-Gleichung proportional zur mittleren Molekülmasse und ist die Extrapolation der Viskositätszahl VN für den Fall verschwindender Polymerkonzentrationen. Sie kann aus Messreihen oder durch die Verwendung geeigneter Näherungsverfahren (z. B. Billmeyer) abgeschätzt werden. Die VN [ml/g] erhält man aus der Messung der Lösungsviskosität im Kapillar-Viskosimeter, vorzugsweise Ubbelohde-Viskosimeter. Die Lösungsviskosität ist ein Maß für das mittlere Molekulargewicht eines Kunststoffs. Die Bestimmung erfolgt an gelöstem Polymer, wobei unterschiedliche Lösungsmittel, vorzugsweise Ameisensäure, m-Kresol, Tetrachlorethan, Phenol, 1,2-Dichlorbenzol, und Konzentrationen zum Einsatz kommen. Durch die Viskositätszahl VN ist eine Kontrolle der Verarbeitungs- und Gebrauchseigenschaften von Kunststoffen möglich. Eine thermische Beanspruchung des Polymers, Alterungsvorgänge oder das Einwirken von Chemikalien, Bewitterung und Licht können durch vergleichende Messungen untersucht werden. Das Verfahren ist für gängige Kunststoffe genormt, im Rahmen der vorliegenden Erfindung gemäß DIN ISO 1628-5 für Polyester. Siehe hierzu auch: http://de.wikipedia.org/wiki/Viskosimetrie und "http://de.wikipedia.org/wiki/Mark-Houwink-Gleichung".

Die erfindungsgemäß als Komponente A) einzusetzenden Polyalkylenterephthalate oder Polycycloalkylenterephthalate können auch im Gemisch mit anderen Polyestern und/oder weiteren Polymeren eingesetzt werden.

Den als Komponente A) einzusetzenden Polyalkylenterephthalaten oder Polycycloalkylenterephthalaten können während der Compoundierung übliche Additive, insbesondere Entformungsmittel, in der Schmelze zugemischt werden. Der Fachmann versteht unter Compoundierung (aus dem Englischen: *Compound* = "Mischung") einen Begriff aus der Kunststofftechnik, welcher mit Kunststoffaufbereitung gleichzusetzen ist und den Veredelungsprozess von Kunststoffen durch Beimischung von Zuschlagstoffen (Füllstoffe, Additive usw.) zur gezielten Optimierung der Eigenschaftsprofile beschreibt. Die Compoundierung erfolgt vorzugsweise in Extrudern, besonders bevorzugt in gleichläufigen Doppelschneckenextrudern, gegenläufigen Doppelschneckenextrudern, Planetwalzenextrudern oder Co-Knetern und umfasst die Verfahrensoperationen Fördern, Aufschmelzen, Dispergieren, Mischen, Entgasen und Druckaufbau.

Als Komponente A) wird bevorzugt wenigstens ein Polyalkylenterephthalat auszuwählen aus Polyethylenterephthalat [CAS Nr. 25038-59-9] oder Polybutylenterephthalat [CAS Nr. 24968-12-5], insbesondere Polybutylenterephthalat (PBT) eingesetzt. Als Komponente A) wird bevorzugt Polybutylenterephthalat (PBT) [CAS Nr. 24968-12-5] eingesetzt, das unter der Marke Pocan® bei der Lanxess Deutschland GmbH, Köln, erhältlich ist.

Alternativ wird als Komponente A) bevorzugt Poly-1,4-cyclohexandimethanolterephthalat [CAS Nr.25037-99-4] als Polycycloalkylenterephthalat eingesetzt.

**Komponente B)**

Die als Komponente B) erfindungsgemäß einzusetzenden organischen Phosphinsäuresalze der oben angegebenen Formel (I) und/oder organischen Diphosphinsäuresalze der oben angegebenen Formel (II) und/oder deren Polymere werden im Rahmen der vorliegenden Erfindung auch als Phosphinate bezeichnet. Bevorzugt steht M in den Formeln (I) oder (II) für Aluminium. Bevorzugt sind $R^1$, $R^2$ in den Formeln (I) und (II) gleich oder verschieden und bedeuten $C_1$-$C_6$-Alkyl, linear oder verzweigt und/oder Phenyl. Besonders bevorzugt sind $R^1$, $R^2$ gleich oder verschieden und bedeuten Methyl, Ethyl, n-Propyl, iso-Propyl, n-Butyl, tert.-Butyl, n-Pentyl und/oder Phenyl.

Bevorzugt bedeutet $R^3$ in Formel (II) Methylen, Ethylen, N-Propylen, iso-Propylen, n-Butylen, tert.-Butylen, n-Pentylen, n-Octylen, n-Dodecylen, Phenylen, Naphthylen, Methylphenylen, Ethylphenylen, tert.-Butylphenylen, Methylnaphthylen, Ethylnaphthylen, tert.-Butylnaphthylen, Phenylmethylen, Phenylethylen, Phenylpropylen oder Phenylbutylen. Besonders bevorzugt bedeutet $R^3$ Phenylen oder Naphthylen. Als Komponente B) einzusetzende Phosphinate sind in der WO-A 97/39053 beschrieben, deren Inhalt in Bezug auf die Phosphinate von der vorliegenden Anmeldung vollumfänglich umfasst wird. Besonders bevorzugte Phosphinate im Sinne der vorliegenden Erfindung sind Aluminium- und Zinksalze des Dimethylphosphinats, des Ethylmethylphosphinats, des Diethylphosphinats und des Methyl-n-propylphosphinats sowie deren Mischungen.

Bevorzugt steht m in Formel (I) für 2 oder 3, besonders bevorzugt für 3.

Bevorzugt steht n in Formel (II) für 1 oder 3, besonders bevorzugt für 3.

Bevorzugt steht x in Formel (II) für 1 oder 2, besonders bevorzugt für 2.

Ganz besonders bevorzugt wird als Komponente B) Aluminium-tris(diethylphosphinat) [CAS Nr. 225789-38-8] eingesetzt, das z. B. von der Fa. Clariant International Ltd. Muttenz, Schweiz unter dem Handelsnamen Exolit® OP1230 oder Exolit® OP1240 angeboten wird.

**Komponente C)**

Als Komponente C) wird erfindungsgemäß mindestens ein kondensiertes Melaminderivat eingesetzt. Bevorzugte Kondensationsprodukte des Melamins sind Melam [CAS Nr. 3576-88-3], Melem [CAS Nr. 1502-47-2] oder Melon [CAS Nr. 32518-77-7], sowie deren Mischungen.

Die Herstellung gelingt gemäß https://de.wikipedia.org/wiki/Melem_(Verbindung) beispielsweise durch Kondensation von Cyanamid, Ammoniumdicyanamid, Dicyandiamid oder Melamin, wobei die Synthese über mehrere Stufen verläuft. Zunächst wird aus Cyanamid oder Ammoniumdicyanamid Dicyandiamid gebildet, welches dann zum Melamin cyclisiert. Eine Kondensation von Melamin führt unter Ammoniakabgabe direkt, oder über die Zwischenverbindung Melam, zur Zielverbindung.

Erfindungsgemäß besonders bevorzugt wird als Komponente C) Melem eingesetzt, wobei Melem-Qualitäten mit einem Melamin-Gehalt kleiner als 1,0 Gew.-% ganz besonders bevorzugt sind und der Gehalt an Melamin über NIR-FT-IR bestimmt wird.

Erfindungsgemäß als Komponente C) einzusetzendes Melem wird beispielsweise als Delacal® NFR von der Fa. Delamin Ltd., Derby, UK angeboten.

**Komponente D)**

Als Komponente D) wird wenigstens ein anorganisches Phosphatsalz aus der Gruppe der Metallhydrogenphosphate, der Metalldihydrogenphosphate, der Metalldihydrogenpyrophosphate und / oder der Metallpyrophosphate eingesetzt, wobei Metall in Komponente D) für Natrium, Kalium, Magnesium, Calcium, Zink, Kupfer und / oder Aluminium steht. Bei dem als Komponente D) erfindungsgemäß einzusetzendem anorganischen Phosphatsalz sind die entsprechenden Hydrate mit umfasst.

Bevorzugte Metalle der Komponente D) sind Magnesium, Calcium, Zink, oder Aluminium. Besonders bevorzugte Metalle sind Magnesium und/oder Zink. Insbesondere bevorzugt ist Magnesium.

Vorzugsweise werden als Komponente D) anorganische Phosphatsalze mit einem pH-Wert im Bereich von 2 bis 6,5, besonders bevorzugt im Bereich von 3,5 bis 6, eingesetzt, wobei sich die Angaben des pH-Wertes auf ein wässriges Medium bei 20°C und einer Phosphatsalz Konzentration von 10 g pro Liter beziehen.

Aus der Gruppe der Metalldihydrogenpyrophosphate und der Metallpyrophosphate werden bevorzugt Magnesiumpyrophosphat [CAS Nr. 13446-24-7] oder Zinkpyrophosphat [CAS Nr. 7446-26-6] eingesetzt. Insbesondere bevorzugt ist Zinkpyrophosphat.

Aus der Gruppe der Metallhydrogenphosphate wird bevorzugt Magnesiumhydrogenphosphat [CAS Nr. 7757-86-0], Zinkhydrogenphosphat [CAS Nr.7664-38-2] oder Calciumhydrogenphosphat eingesetzt. Letzteres wird vorzugsweise in Form seines Dihydrats, Calciumhydrogenphosphat-Dihydrat, $CaHP0_4•2H_20$ [CAS Nr. 7789-77-7] eingesetzt.

Aus der insbesondere als Komponente D) bevorzugt einzusetzenden Gruppe der Metalldihydrogenphosphate werden bevorzugt Aluminiumdihydrogenphosphat [CAS Nr.13530-50-2], Magnesium-bis(dihydrogenphosphat) [CAS Nr.13092-66-5], Zink-bis(dihydrogenphosphat) [CAS-Nr.13598-37-3] oder Zink-bis(dihydrogenphosphat)-dihydrat [CAS Nr. 13986-21-5] eingesetzt. Insbesondere bevorzugt sind Magnesium-bis(dihydrogenphosphat) oder Zink-bis(dihydrogen-phosphat)-dihydrat. Insbesondere ganz besonders bevorzugt ist Magnesium-bis(dihydrogenphosphat).

Die Verbindungen der Komponente D) können einzeln oder als Mischung eingesetzt werden. Vorzugsweise werden die Verbindungen der Komponente D) in Form von Mischungen mit Calciumpyrophosphat [CAS Nr. 7790-76-3] oder mit Calciumhydrogenphosphat bzw. Calciumhydrogenphosphat-Dihydrat eingesetzt.

**Komponente E)**

Als Komponente E) wird wenigstens ein von Komponente C) verschiedenes Melaminderivat eingesetzt. Bevorzugt werden als Komponente E) Umsetzungsprodukte des Melamins mit Säuren eingesetzt. Besonders bevorzugt werden als Komponente E) Melamincyanurat, Melaminpolyphosphat oder Melamin-interkalierte Aluminium-, Zink- oder Magnesium-Salze von kondensierten Phosphaten eingesetzt. Letztere sind in WO2012/025362 A1 beschrieben, deren Inhalt hiermit vollumfänglich umfasst ist.

Ganz besonders bevorzugt werden als Komponente E) Melamincyanurat, Melaminpolyphosphat, Bis-Melaminzinko-diphosphat **(**EP 2 609 173 A1) oder Bis-Melamin-alumotriphosphat **(**EP 2 609 173 A1) eingesetzt.

Insbesondere bevorzugt werden als Komponente E) Melaminpolyphosphat oder Melamincyanurat eingesetzt. Insbesondere ganz besonders bevorzugt wird als Komponente E) Melamincyanurat eingesetzt.

Melaminpolyphosphat [CAS Nr. 218768-84-4] ist in diversen Produktqualitäten kommerziell verfügbar. Beispiele hierfür sind u.a. Melapur® 200/70 der Fa. BASF, Ludwigshafen, Deutschland sowie Budit® 3141 der Fa. Budenheim, Budenheim, Deutschland. Melamincyanurat [CAS Nr. 37640-57-6] ist in diversen Produktqualitäten kommerziell verfügbar. Beispiele hierfür sind u.a. Melapur® MC25 der Fa. BASF, Ludwigshafen, Deutschland.

**Komponente F)**

Als Komponente F) wird wenigstens ein Metallsulfat eingesetzt. Bevorzugte Metallsulfate sind Magnesiumsulfat, Calciumsulfat [CAS Nr. 7778-18-9] oder Bariumsulfat. Besonders bevorzugt wird als Komponente F) Magnesiumsulfat [CAS Nr. 7487-88-9] oder Bariumsulfat eingesetzt.

Das insbesondere bevorzugt als Komponente F) einzusetzende Bariumsulfat [CAS Nr. 7727-43-7] kann in Form des natürlich vorkommenden Baryts oder in Form von nach bekannten technischen Verfahren synthetisch hergestelltem Bariumsulfat eingesetzt werden. Als übliche Herstellmethoden für Bariumsulfat wird in http://de.wikipedia.org/wiki/Bariumsulfat beispielsweise die Fällung von Bariumsulfid oder Bariumchlorid mit Natriumsulfat gelehrt. Die mittlere Teilchengröße [d50-Wert] ist dabei bevorzugt im Bereich von 0,1 bis 50µm, besonders bevorzugt im Bereich von 0,5 bis 10 µm und ganz besonders bevorzugt im Bereich von 0,6 bis 2µm. Das Bariumsulfat kann dabei unbehandelt oder mit anorganischen und/oder organischen Oberflächenbehandlungen ausgerüstet sein. Beispiele für anorganische oder organische Oberflächenbehandlungen sowie Verfahren für deren Applikation auf die Oberfläche werden beispielsweise in WO 2008/023074 A1 gelehrt. Geeignete synthetische Bariumsulfate werden z. B. von der Fa. Sachtleben Chemie GmbH, Duisburg, Deutschland unter den Handelsnamen Blanc fixe F und Blanc Fixe Super F angeboten.

Des weiteren geeignete Bariumsulfat-Qualitäten sind z. B. Albasoft® 90 und/oder Albasoft® 100 der Firma Deutsche Baryt Industrie Dr. Rudolf Alberti GmbH&Co. KG, Bad Lauterberg im Harz, Deutschland.

**Komponente G)**

Als Komponente G) enthalten die Zusammensetzungen, Formmassen und Erzeugnisse wenigstens einen von den Komponenten A) bis F) verschiedenen Füll- und/oder Verstärkungsstoff. Bevorzugt wird aber auch eine Mischung aus zwei oder mehreren unterschiedlichen Füll- und/oder Verstärkungsstoffen.

Vorzugsweise wird wenigstens ein Füll- und/oder Verstärkungsstoff aus der Gruppe Glimmer, Silikat, Quarz, insbesondere Quarzmehl, Titandioxid, Wollastonit, Nephelinsyenit, Kaolin, amorphe Kieselsäuren, Magnesiumcarbonat, Kreide, Feldspat, Glasfasern, Glaskugeln, Glasmehl und/oder faserförmige Füllstoffe und/oder Verstärkungsstoffe auf der Basis von Kohlenstofffasern als Komponente G) eingesetzt.

Bevorzugt werden mineralische teilchenförmige Füllstoff- und/oder Verstärkungsstoffe auf der Basis von Glimmer, Silikat, Quarz, Wollastonit, Kaolin, amorphe Kieselsäuren, Magnesiumcarbonat, Kreide oder Feldspat eingesetzt. Besonders bevorzugt werden ferner auch nadelförmige mineralische Füllstoffe eingesetzt. Unter nadelförmigen mineralischen Füll- und/oder Verstärkungsstoffen wird erfindungsgemäß ein mineralischer Füllstoff mit stark ausgeprägtem nadelförmigen Charakter verstanden. Bevorzugt weist der nadelförmige mineralische Füll- und/oder Verstärkungsstoffl ein Länge : Durchmesser - Verhältnis im Bereich von 2:1 bis 35:1, besonders bevorzugt im Bereich von 3:1 bis 19:1, am meisten bevorzugt im Bereich von 4:1 bis 12:1 auf. Die mittlere Teilchengröße d50 der erfindungsgemäß einzusetzenden nadelförmigen Mineralien liegt bevorzugt bei kleiner 20 µm, besonders bevorzugt bei kleiner 15 µm, insbesondere bevorzugt bei kleiner 10 µm bestimmt mit einem CILAS GRANULOMETER gemäß ISO 13320:2009 mittels Laserbeugung.

Alle als Komponente G) einzusetzenden Füll- und/oder Verstärkungsstoffe können bedingt durch die Verarbeitung zur Formmasse bzw. zu einem Erzeugnis in diesen einen kleineren d97- bzw. d50-Wert aufweisen, als die ursprünglich eingesetzten Füll- bzw. Verstärkungsstoffe bzw. Glasfasern.

Die Füll- und/oder Verstärkungsstoffe können einzeln oder als Mischung aus zwei oder mehr unterschiedlichen Füllstoffen und/oder Verstärkungsstoffen eingesetzt werden.

Der als Komponente G) einzusetzende Füll- und/oder Verstärkungsstoff kann in einer bevorzugten Ausführungsform oberflächenmodifiziert sein, besonders bevorzugt mit einem Haftvermittler bzw. Haftvermittlersystem, insbesondere bevorzugt auf Epoxidbasis. Die Vorbehandlung ist jedoch nicht unbedingt erforderlich.

In einer besonders bevorzugten Ausführungsform werden als Komponente G) Glasfasern eingesetzt. Gemäß "http://de.wikipedia.org/wiki/Faser-Kunststoff-Verbund" unterscheidet man geschnittene Fasern, auch als Kurzfasern bezeichnet, mit einer Länge im Bereich von 0,1 bis 1mm, Langfasern mit einer Länge im Bereich von 1 bis 50mm und Endlosfasern mit einer Länge L > 50mm. Kurzfasern werden in der Spritzgusstechnik eingesetzt und können direkt mit einem Extruder verarbeitet werden. Langfasern können ebenfalls noch in Extrudern verarbeitet werden. Sie finden im großen Umfang Einsatz beim Faserspritzen. Langfasern werden häufig Duroplasten als Füllstoff zugemischt. Endlosfasern werden als Rovings oder Gewebe in faserverstärkten Kunststoffen eingesetzt. Erzeugnisse mit Endlosfasern erzielen die höchsten Steifigkeits- und Festigkeitswerte. Des Weiteren werden gemahlene Glasfasern angeboten, deren Länge nach der Vermahlung typischerweise im Bereich von 70 bis 200µm liegt.

Erfindungsgemäß bevorzugt werden als Komponente G) geschnittene Langglasfasern mit einer Ausgangslänge im Bereich von 1 bis 50mm, besonders bevorzugt im Bereich von 1 bis 10mm, ganz besonders bevorzugt im Bereich von 2 bis 7mm eingesetzt. Die Ausgangslänge bezeichnet die durchschnittliche Länge der Glasfasern wie sie vor einer Compoundierung der erfindungsgemäßen Zusammensetzung(en) zu einer erfindungsgemäßen Formmasse vorliegen. Die als Komponente G) bevorzugt einzusetzenden Glasfasern können bedingt durch die Verarbeitung, insbesondere Compoundierung, zur Formmasse oder zum Erzeugnis in der Formmasse oder im Erzeugnis einen kleineren d97- bzw. d50-Wert aufweisen, als die ursprünglich eingesetzten Glasfasern. So liegt der arithmetische Mittelwert der Glasfaserlänge nach der Verarbeitung häufig nur noch im Bereich von 150 µm und 300 µm.

Die Ermittlung der Glasfaserlänge und Glasfaserlängenverteilung erfolgt im Rahmen der vorliegenden Erfindung im Falle verarbeiteter Glasfasern gemäß ISO 22314, welche zunächst eine Veraschung der Proben bei 625°C vorsieht. Anschließend wird die Asche auf einen mit demineralisiertem Wasser bedeckten Objektträger in einer geeigneten Kristallisierschale gegeben und die Asche ohne Wirkung von mechanischen Kräften im Ultraschallbad verteilt. Der nächste Schritt sieht die Trocknung im Ofen bei 130 °C vor und anschließend erfolgt mit Hilfe von lichtmikroskopischen Aufnahmen die Ermittlung der Glasfaserlänge. Dazu werden von drei Aufnahmen mindestens 100 Glasfasern ausgemessen, so dass insgesamt 300 Glasfasern zur Ermittlung der Länge herangezogen werden. Die Glasfaserlänge kann dabei entweder als arithmetischer Mittelwert $l_n$ nach Gleichung

$$l_n = \frac{1}{n} \cdot \sum_{i}^{n} l_i$$

mit $l_i$ = Länge der iten Faser und n = Anzahl der gemessenen Fasern berechnet und in geeigneter Weise als Histogramm dargestellt oder bei einer angenommenen

Normalverteilung der gemessenen Glasfaserlängen *l* mit Hilfe der Gauß-Funktion nach Gleichung

$$f(l) = \frac{1}{\sqrt{2\pi} \cdot \sigma} \cdot e^{-\frac{1}{2}\left(\frac{l-l_c}{\sigma}\right)^2}$$

bestimmt werden. Dabei sind $l_c$ und $\sigma$ spezielle Kennwerte der Normalverteilung; $l_c$ ist der mittlere Wert und $\sigma$ die Standardabweichung (siehe: M. Schoßig, Schädigungsmechanismen in faserverstärkten Kunststoffen, 1, 2011, Vieweg und Teubner Verlag, Seite 35, ISBN 978-3-8348-1483-8**)**. Nicht in eine Kunststoffmatrix eingebundene Glasfasern werden hinsichtlich ihrer Längen gemäß obiger Methoden jedoch ohne die Aufbereitung durch Veraschung und Abtrennung von der Asche analysiert.

Die erfindungsgemäß bevorzugt als Komponente G) einzusetzenden Glasfasern [CAS Nr. 65997-17-3)] haben bevorzugt einen Faserdurchmesser im Bereich von 7 bis 18µm, besonders bevorzugt im Bereich von 9 bis 15µm, der durch wenigstens eine dem Fachmann zur Verfügung stehende Möglichkeit zu ermitteln ist, insbesondere zu ermitteln durch µ-Röntgen-Computertomographie in Analogie zu **"**Quantitative Messung von Faserlängen und -verteilung in faserverstärkten Kunststoffteilen mittels µ-Röntgen-Computertomographie", J.KASTNER, et al. DGZfP-Jahrestagung 2007 - Vortrag 47**.** Die als Komponente G) vorzugsweise einzusetzenden Glasfasern werden bevorzugt als Endlosfasern oder als geschnittene oder gemahlene Glasfasern zugesetzt.

In einer Ausführungsform werden die als Komponente G) einzusetzenden Füll- und/oder Verstärkungsstoffe, insbesondere Glasfasern, bevorzugt mit einem geeigneten Schlichtesystem und einem Haftvermittler bzw. Haftvermittlersystem, besonders bevorzugt auf Silanbasis, ausgerüstet.

Ganz besonders bevorzugte Haftvermittler auf Silanbasis für die Vorbehandlung sind Silanverbindungen der allgemeinen Formel (IV)

$$(X-(CH_2)_q)_k-Si-(O-CrH_{2r+1})_{4-k} \qquad (IV)$$

in der die Substituenten folgende Bedeutung haben:

X: $NH_2$-, HO-,

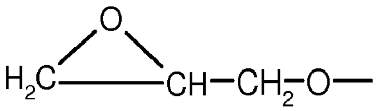

q: eine ganze Zahl von 2 bis 10, bevorzugt 3 bis 4,

r: eine ganze Zahl von 1 bis 5, bevorzugt 1 bis 2,

k: eine ganze Zahl von 1 bis 3, bevorzugt 1.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Glasfasern werden die Silanverbindungen bevorzugt in Mengen im Bereich von 0,05 bis 2 Gew.-%, besonders bevorzugt im Bereich von 0,25 bis 1,5 Gew.-% und insbesondere im Bereich von 0,5 bis 1 Gew.-% bezogen auf 100 Gew,-% des Füll- bzw. Verstärkungsstoffs, insbesondere die Glasfasern, zur Oberflächenbeschichtung eingesetzt.

**Komponente H)**

Bevorzugt als Komponente H) einzusetzendes weiteres und von den Komponenten B) bis G) verschiedenes Additiv sind Gleit- und Entformungsmittel, UV-Stabilisatoren, Farbmittel, kettenverlängernd wirkende Additive, Antioxidantien, Weichmacher, Fließhilfsmittel, Thermostabilisatoren, Antioxidantien, Gammastrahlenstabilisatoren, Hydrolysestabilisatoren, Elastomermodifikatoren, Antistatika, Emulgatoren, Nukleierungsmittel, Verarbeitungshilfsmittel, Antitropfmittel sowie weitere Flammschutzmittel verschieden von den Komponenten B), C) und gegebenenfalls E)

Die Additive können alleine, oder in Mischung bzw. in Form von Masterbatchen eingesetzt werden.

Als **Gleit- und Entformungsmittel** wird wenigstens eines aus der Reihe der langkettigen Fettsäuren, der Salze langkettiger Fettsäuren, der Esterderivate langkettiger Fettsäuren sowie Montanwachse ausgewählt.

Bevorzugte langkettige Fettsäuren sind Stearinsäure oder Behensäure. Bevorzugte Salze der langkettigen Fettsäuren sind Ca- oder Zn-Stearat. Bevorzugte Esterderivate langkettiger Fettsäuren sind solche auf Basis von Pentaerythritol, insbesondere $C_{16}$-$C_{18}$ Fettsäureester des Pentaerythritols [CAS Nr. 68604-44-4] oder [CAS Nr. 85116-93-4].

Montanwachse im Sinne der vorliegenden Erfindung sind Mischungen aus geradkettigen, gesättigten Carbonsäuren mit Kettenlängen von 28 bis 32 C Atomen. Erfindungsgemäß besonders bevorzugt werden Gleit- und/oder Entformungsmittel aus der Gruppe der Ester gesättigter oder ungesättigter aliphatischer Carbonsäuren mit 8 bis 40 C-Atomen mit aliphatischen gesättigten Alkoholen mit 2 bis 40 C-Atomen sowie Metallsalze gesättigter oder ungesättigter aliphatischer Carbonsäuren mit 8 bis 40 C-Atomen eingesetzt, wobei Pentaerythritoltetrastearat, Calciumstearat [CAS Nr. 1592-23-0] und/oder Ethylenglycoldimontanat, hier insbesondere Licowax® E [CAS-Nr. 74388-22-0] der Fa. Clariant, Muttenz, Basel ganz besonders bevorzugt ist und Pentaerythritoltetrastearat [CAS-Nr. 115-83-3] z. B. erhältlich als Loxiol® P861 der Fa. Emery Oleochemicals GmbH, Düsseldorf, Deutschland insbesondere ganz besonders bevorzugt ist.

Als **UV-Stabilisatoren** werden bevorzugt substituierte Resorcine, Salicylate, Benzotriazole, Triazin-Derivate oder Benzophenone eingesetzt.

Als **Farbmittel** werden bevorzugt organische Pigmente, bevorzugt Phthalocyanine, Chinacridone, Perylene sowie Farbstoffe, bevorzugt Nigrosin oder Anthrachinone, weiterhin anorganische Pigmente, insbesondere Titandioxid (sofern nicht bereits als Füllstoff eingesetzt), Ultramarinblau, Eisenoxid, Zinksulfid oder Ruß eingesetzt werden.

Für das erfindungsgemäß als Pigment bevorzugt einzusetzende **Titandioxid** kommen Titandioxid-Pigmente in Frage, deren Grundkörper nach dem Sulfat (SP)- oder Chlorid (CP)-Verfahren hergestellt sein können und die Anatas und / oder Rutilstruktur, bevorzugt Rutilstruktur haben. Der Grundkörper muss nicht stabilisiert sein, jedoch ist eine spezielle Stabilisierung bevorzugt: beim CP-Grundkörper durch eine Al- Dotierung von 0,3-3,0 Gew.-% (gerechnet als $Al_2O_3$) und einem Sauerstoffüberschuss in der Gasphase bei der Oxidation des Titantetrachlorids zu Titandioxid von mindestens 2%; beim SP-Grundkörper durch eine Dotierung z. B. mit Al, Sb, Nb oder Zn. Besonders bevorzugt ist eine "leichte" Stabilisierung mit Al, bzw. bei höheren Al-Dotierungsmengen eine Kompensation mit Antimon. Bei der Verwendung von Titandioxid als Weißpigment in Farben und Lacken, Kunststoffen usw. ist bekannt, dass durch UV-Absorption erzeugte unerwünschte photokatalytische Reaktionen zur Zersetzung des pigmentierten Materials führen. Dabei absorbieren Titandioxid-Pigmente im nahen ultravioletten Bereich Licht, so dass Elektron-Loch-Paare entstehen, welche hochreaktive Radikale auf der Titandioxid-Oberfläche erzeugen. Die gebildeten Radikale haben in organischen Medien einen Bindemittelabbau zur Folge. Erfindungsgemäß bevorzugt wird zur Erniedrigung der Photoaktivität des Titandioxids

dieses anorganisch nachbehandelt, besonders bevorzugt mit Oxiden von Si und/oder Al und/oder Zr und/oder durch den Einsatz von Sn-Verbindungen.

Bevorzugt ist die Oberfläche von pigmentärem Titandioxid mit amorphen Auffällungen von Oxidhydraten der Verbindungen $SiO_2$ und/oder $Al_2O_3$ und/oder Zirkonoxid bedeckt. Die $Al_2O_3$-Hülle erleichtert die Pigmentdispergierung in die Polymermartrix, die $SiO_2$-Hülle erschwert den Ladungsaustausch an der Pigmentoberfläche und verhindert dadurch den Polymerabbau.

Erfindungsgemäß wird das Titandioxid bevorzugt mit hydrophilen und/oder hydrophoben organischen Beschichtungen versehen, insbesondere mit Siloxanen oder Polyalkoholen.

Erfindungsgemäß bevorzugt als Farbmittel der Komponente H) einzusetzendes Titandioxid [CAS Nr. 13463-67-7] weist bevorzugt eine mittlere Teilchengröße d50 im Bereich von 90 bis 2000nm, besonders bevorzugt im Bereich von 200 bis 800nm auf. Die mittlere Teilchengröße d50 ist der aus der Teilchengrößenverteilung ermittelte Wert, zu dem 50Gew.-% der Teilchen einen äquivalenten Kugeldurchmesser kleiner als diesen d50 Wert aufweisen. Die zugrunde liegende Norm ist ISO 13317-3.

Die Angaben der Teilchengrößenverteilung bzw. der mittleren Teilchengröße beim Titandioxid beziehen sich auf sogenannte oberflächenbasierte Teilchengrößen, jeweils vor Einarbeitung in die thermoplastische Formmasse. Die Teilchengrößenbestimmung erfolgt erfindungsgemäß durch Laserdiffraktometrie, siehe C.M. Keck, Moderne Pharmazeutische Technologie 2009, Freie Universität Berlin, Kapitel 3.1. oder QUANTACHROME PARTIKELWELT NO 6, Juni 2007, Seiten 1 bis 16.

Kommerziell erhältliches Titandioxid sind beispielsweise Kronos® 2230, Kronos® 2233, Kronos® 2225 und Kronos® vlp7000 der Fa. Kronos, Dallas, USA.

Vorzugsweise wird das als Pigment einzusetzende Titandioxid in Mengen im Bereich von 0,1 bis 60 Massenanteilen, besonders bevorzugt in Mengen im Bereich von 1 bis 35 Massenanteilen, ganz besonders bevorzugt in Mengen im Bereich von 2 bis 20 Massenanteilen, jeweils bezogen auf 100 Massenanteile der Komponente A), eingesetzt.

Bevorzugt können als Komponente H) **di- oder mehrfunktionelle verzweigend oder kettenverlängernd wirkende Additive,** enthaltend mindestens zwei und höchstens 15 verzweigend oder kettenverlängernd wirkende funktionelle Gruppen pro Molekül, eingesetzt werden. Als verzweigende bzw. kettenverlängende Additive kommen niedermolekulare oder oligomere Verbindungen in Frage, die über mindestens zwei und höchstens 15 verzweigend oder kettenverlängernd wirkende funktionelle Gruppen pro Molekül verfügen, welche mit primären und/oder sekundären Aminogruppen, und/oder Amidgruppen und/oder Carbonsäuregruppen reagieren können. Kettenverlängernd wirkende funktionelle Gruppen sind bevorzugt Isocyanate, Alkohole, blockierte Isocyanate, Epoxide, Maleinsäureanhydrid, Oxazoline, Oxazine, Oxazolone, wobei Epoxide bevorzugt sind.

Insbesondere bevorzugte di- oder mehrfunktionelle verzweigend oder kettenverlängernd wirkende Additive sind Diepoxide auf Basis Diglycidylether (Bisphenol und Epichlorhydrin), auf Basis von Aminepoxidharz (Anilin und Epichlorhydrin), auf Basis von Diglycidylester (cycloaliphatische Dicarbonsäuren und Epichlorhydrin) einzeln oder in Mischungen sowie 2,2-Bis[p-hydroxy-phenyl]-propan-diglycidylether, Bis-[p-(N-methyl-N-2,3-epoxy-propylamino)-phenyl]-methan sowie epoxidierte Fettsäureester des Glycerins, enthaltend mindestens zwei und höchstens 15 Epoxidgruppen pro Molekül.

Besonders bevorzugte di- oder mehrfunktionelle verzweigend oder kettenverlängernd wirkende Additive sind Glycidylether, ganz besonders bevorzugt Bisphenol A-Diglycidylether [CAS Nr. 98460-24-3] oder epoxidierte Fettsäureester des Glycerins, sowie auch ganz besonders bevorzugt epoxidiertes Sojaöl [CAS Nr. 8013-07-8].

Zur Verzweigung/Kettenverlängerung sind zudem besonders bevorzugt geeignet:

1. Poly- bzw. Oligoglycidyl- oder Poly-(ß-methylglycidyl)-ether erhältlich durch Umsetzung einer Verbindung mit mindestens zwei freien alkoholischen Hydroxygruppen und/oder phenolischen Hydroxygruppen und einem geeignet substituierten Epichlorhydrin unter alkalischen Bedingungen, oder in Anwesenheit eines sauren Katalysators und anschließender Alkalibehandlung.

   Poly- bzw. Oligoglycidyl- oder Poly-(ß-methylglycidyl)-ether leiten sich bevorzugt ab von acyclischen Alkoholen, insbesondere Ethylenglykol, Diethylenglykol und höhereren Poly-(oxyethylen)-glykolen, Propan-1,2-diol, Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylpropan, Bistrimethylolpropan, Pentaerythrit, Sorbit sowie von Polyepichlorhydrinen.

   Sie leiten sich aber auch bevorzugt ab von cycloaliphatischen Alkoholen, insbesondere 1,3- oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en oder sie besitzen aromatische Kerne, insbesondere N,N-Bis-(2-hydroxyelhyl)anilin oder p,p'-Bis-(2-hydroxyethyl-amino)-diphenylmethan.

   Die Epoxidverbindungen können sich bevorzugt auch von einkernigen Phenolen ableiten, insbesondere von Resorcin oder Hydrochinon, oder sie basieren auf mehrkernigen Phenolen, insbesondere auf Bis-(4-hydroxyphenyl)-methan, 2,2-Bis-(4-hydroxyphenyl)-propan, 2,2-Bis-(3,5-dibrom-4-hydroxyphenyl)-propan, 4,4'-Dihydroxydiphenylsulfon oder auf unter sauren Bedingungen erhaltene Kondensationsprodukte von Phenolen mit Forrnaldehyd, insbesondere Phenol-Novolake.

2. Poly- bzw. Oligo-(N-glycidyl)-Verbindungen ferner erhältlich durch Dehydrochlorierung der Reaktionsprodukte von Epichlorhydrin mit Aminen, die mindestens zwei Aminowasserstoffatome enthalten. Bei diesen Aminen handelt es sich bevorzugt um Anilin, Toluidin, n-Butylamin, Bis-(4-aminophenyl)methan, m-Xylylendiamin oder Bis-(4-methylaminophenyl)-methan, aber auch N,N,O-Triglycidyl-m-aminophenyl oder N,N,O-Triglycidyl-p-aminophenol.
Zu den Poly-(N-glycidyl)-Verbindungen zählen aber auch bevorzugt N,N'-Diglycidylderivate von Cycloalkylenharnstoffen, besonders bevorzugt Ethylenharnstoff oder 1,3-Propylenharnstoff, und N,N'-Diglycidylderivate von Hydantoinen, insbesondere 5,5-Dimethylhydantoin.

3. Poly- bzw. Oligo-(S-glycidyl)-Verbindungen, insbesondere Di-S-glycidylderivate, die sich von Dithiolen, bevorzugt Ethan-1,2-dithiol oder Bis-(4-mercaptomethylphenyl)-ether, ableiten.

4. Epoxidierte Fettsäureester des Glycerins, insbesondere epoxidierte Pflanzenöle. Sie werden durch Epoxidierung der reaktionsfähigen Olefingruppen von Triglyceriden ungesättigter Fettsäuren erhalten. Die Herstellung epoxidierter Fettsäureester des Glycerins kann ausgehend von ungesättigten Fettsäureestern des Glycerins, bevorzugt von Pflanzenölen, und organischen Peroxycarbonsäuren (Prileschajew-Reaktion) erfolgen. Verfahren zur Herstellung von epoxidierten Pflanzenölen sind zum Beispiel in Smith, March, March's Advanced Organic Chemistry (5. Auflage, Wiley-Interscience, New York, 2001) beschrieben. Bevorzugte epoxidierte Fettsäureester des Glycerins sind Pflanzenöle. Erfindungsgemäß besonders bevorzugter epoxidierter Fettsäureester des Glycerins ist epoxidiertes Sojaöl [CAS Nr. 8013-07-8].

5. Mit Glycidylmethacrylat modifizierte Styrol-Acrylat Polymere, erhältlich durch Polymerisation von Styrol, Glycidylmethacrylat und Acrylsäure und/oder Methacrylsäure.

Bevorzugt als Komponente H) einzusetzende **Weichmacher** sind Phthalsäuredioctylester, Phthalsäuredibenzylester, Phthalsäurebutylbenzylester, Kohlenwasserstofföle oder N-(n-Butyl)benzolsulfonamid.
Bevorzugt als Komponente H) einzusetzende **Fließhilfsmittel** sind Copolymerisate enthaltend wenigstens ein $\alpha$-Olefin mit wenigstens einen Methacrylsäureester oder Acrylsäureester eines aliphatischen Alkohols. Besonders bevorzugt sind Copolymersate aus mindestens einem $\alpha$-Olefin mit aus mindestens einem Methacrylsäurester oder Acrylsäureester eines aliphatischen Alkohols. Ganz besonders bevorzugt sind Copolymersate aus einem $\alpha$-Olefin und einem Acrylsäureester eines aliphatischen Alkohols. Insbesondere bevorzugt sind dabei Copolymerisate bei denen das $\alpha$-Olefin aus Ethen und/oder Propen aufgebaut ist und der Methacrylsäurester oder Acrylsäureester als Alkoholkomponente lineare oder verzweigte Alkylgruppen mit 6 bis 20 C-Atomen enthält. Insbesondere ganz besonders bevorzugt ist ein Copolymerisat aus Ethen und Acrylsäure-(2-ethyl)-hexylester. Erfindungsgemäß als Fließhilfsmittel geeignete Copolymerisate zeichnen sich neben der Zusammensetzung auch durch das niedrige Molekulargewicht aus. Dementsprechend sind vor allem Copolymerisate bevorzugt, die einen MFI-Wert gemessen bei 190°C und einer Belastung von 2,16kg von mindestens 100g / 10 min, bevorzugt von mindestens 150g / 10 min, besonders bevorzugt von mindestens 300g/10min aufweisen. Der MFI, Melt-Flow-Index, dient zur Charakterisierung des Flusses einer Schmelze eines Thermoplasten und unterliegt den Normen ISO 1133 oder ASTM D 1238. Der MFI bzw. alle Angaben zum MFI im Rahmen der vorliegenden Erfindung beziehen sich bzw. wurden einheitlich nach ISO 1133 bei 190°C und einem Prüfgewicht von 2,16 kg gemessen bzw. bestimmt.
Bevorzugt als Komponente H) einzusetzende **Elastomermodifikatoren** umfassen u.a. ein oder mehrere Pfropfpolymerisate von

H.1 5 bis 95 Gew.-%, vorzugsweise 30 bis 90 Gew.-%, wenigstens eines Vinylmonomeren auf

H.2 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt <-20°C. Die Gewichtsprozente beziehen sich in diesem Fall auf 100 Gew.-% Komponente H).

Die Pfropfgrundlage H.2 hat im allgemeinen eine mittlere Teilchengröße (d50-Wert) im Bereich von 0,05 bis 10$\mu$m, vorzugsweise im Bereich von 0,1 bis 5$\mu$m, besonders bevorzugt im Bereich von 0,2 bis 1$\mu$m.

Monomere H.1 sind vorzugsweise Gemische aus

H.1.1 50 bis 99Gew.-% Vinylaromaten und/oder kernsubstituierten Vinylaromaten, insbesondere Styrol, α-Methylstyrol, p-Methylstyrol, p-Chlorstyrol, und/oder Methacrylsäure-($C_1$-$C_8$)-Alkylester, insbesondere Methylmethacrylat, Ethylmethacrylat und

H.1.2 1 bis 50 Gew.-% Vinylcyanide, insbesondere ungesättigte Nitrile wie Acrylnitril und Methacrylnitril, und/oder (Meth)Acrylsäure-($C_1$-$C_8$)-alkylester, insbesondere Methylmethacrylat, Glycidylmethacrylat, n-Butylacrylat, t-Butylacrylat, und/oder Derivate, insbesondere Anhydride und Imide ungesättigter Carbonsäuren, insbesondere Maleinsäureanhydrid oder N-Phenyl-Maleinimid. Die Gewichtsprozente beziehen sich in diesem Fall auf 100 Gew.-% Komponente H).

Bevorzugte Monomere H.1.1 sind ausgewählt aus mindestens einem der Monomere Styrol, α-Methylstyrol und Methylmethacrylat, bevorzugte Monomere H.1.2 sind ausgewählt aus mindestens einem der Monomere Acrylnitril, Maleinsäureanhydrid, Glycidylmethacrylat und Methylmethacrylat.

Besonders bevorzugte Monomere sind H.1.1 Styrol und H.1.2 Acrylnitril.

Für die in den Elastomermodifikatoren einzusetzenden Pfropfpolymerisate geeignete Pfropfgrundlagen H.2 sind beispielsweise Dienkautschuke, EPDM-Kautschuke, also solche auf Basis Ethylen/Propylen und gegebenenfalls Dien, ferner Acrylat-, Polyurethan-, Silikon-, Chloropren und Ethylen/Vinylacetat-Kautschuke. EPDM steht für Ethylen-Propylen-Dien-Kautschuk.

Bevorzugte Pfropfgrundlagen H.2 sind Dienkautschuke, insbesondere auf Basis Butadien, Isopren etc. oder Gemische von Dienkautschuken oder Copolymerisate von Dienkautschuken oder deren Gemischen mit weiteren copolymerisierbaren Monomeren, insbesondere gemäß H.1.1 und H.1.2, mit der Maßgabe, dass die Glasübergangstemperatur der Komponente H.2 bei <10°C, vorzugsweise bei <0°C, besonders bevorzugt bei <-10°C liegt.

Besonders bevorzugte Propfgrundlagen H.2 sind ABS-Polymerisate (Emulsions-, Masse- und Suspensions-ABS) wobei ABS für Acrylnitril-Butadien-Styrol steht, wie sie z. B. in der

DE-A 2 035 390 oder in der DE-A 2 248 242 bzw. in Ullmann, Enzyklopädie der Technischen Chemie, Bd. 19 (1980), S. 280 ff. beschrieben sind..

Die Elastomermodifikatoren bzw. Pfropfpolymerisate werden durch radikalische Polymerisation, bevorzugt durch Emulsions-, Suspensions-, Lösungs- oder Massepolymerisation, insbesondere durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten auch solche Produkte verstanden, die durch (Co)Polymerisation der Pfropfmonomere in Gegenwart der Pfropfgrundlage gewonnen werden und bei der Aufarbeitung mit anfallen.

Ebenfalls geeignete Acrylatkautschuke basieren auf Pfropfgrundlagen H.2 die vorzugsweise Polymerisate aus Acrylsäurealkylestern, gegebenenfalls mit bis zu 40 Gew.-%, bezogen auf H.2 anderen polymerisierbaren, ethylenisch ungesättigten Monomeren. Zu den bevorzugten polymerisierbaren Acrylsäureestern gehören $C_1$-$C_8$-Alkylester, vorzugsweise Methyl-, Ethyl-, Butyl-, n-Octyl- und 2-Ethylhexylester; Halogenalkylester, vorzugsweise Halogen-$C_1$-$C_8$-alkylester, vorzugsweise Chlorethylacrylat, Glycidylester sowie Mischungen dieser Monomeren. Dabei sind Propfpolymerisate mit Butylacrylat als Kern und Methylmethacrylaten als Schale, insbesondere Paraloid® EXL2300, Fa. Dow Corning Corporation, Midland Michigan, USA, besonders bevorzugt.

Weitere bevorzugt geeignete Pfropfgrundlagen gemäß H.2 sind Silikonkautschuke mit pfropfaktiven Stellen, wie sie in DE-A 3 704 657, DE-A 3 704 655 , DE-A 3 631 540 und DE-A 3 631 539 beschrieben werden.

Bevorzugte Propfpolymerisate mit einem Silikonanteil sind solche, die Methylmethacrylat oder Styrol-Acrylnitril als Schale und ein Silikon/Acrylat-Propf als Kern aufweisen. Unter solchen mit Styrol-Acrylnitril als Schale kann z. B. Metablen® SRK200 eingesetzt werden. Unter solchen mit Methylmethacrylat als Schale können z. B. Metablen® S2001, Metablen® S2030 und/oder Metablen® SX-005 eingesetzt werden. Besonders bevorzugt wird Metablen® S2001 eingesetzt. Die Produkte mit dem Handelsnamen Metablen® sind erhältlich bei Mitsubishi Rayon Co., Ltd., Tokio, Japan.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, bevorzugt Ethylenglykoldimethacrylat, Allylmethacrylat; mehrfach ungesättigte heterocyclische Verbindungen, bevorzugt Trivinyl- und Triallylcyanurat; polyfunktionelle Vinylverbindungen, bevorzugt Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5 Gew.-%, insbesondere 0,05 bis 2 Gew.-%, bezogen auf 100 Gew.-% der Pfropfgrundlage H.2.

Bei cyclischen vernetzenden Monomeren mit mindestens 3 ethylenisch ungesättigten Gruppen ist es vorteilhaft, die Menge auf unter 1 Gew.-% bezogen auf 100 Gew.-% der Pfropfgrundlage H.2 zu beschränken.

Bevorzugte "andere" polymerisierbare, ethylenisch ungesättigte Monomere, die neben den Acrylsäureestern gegebenenfalls zur Herstellung der Pfropfgrundlage H.2 dienen können, sind Acrylnitril, Styrol, $\alpha$-Methylstyrol, Acrylamide, Vinyl-$C_1$-$C_6$-alkylether, Methylmethacrylat, Glycidylmethacrylat, Butadien. Bevorzugte Acrylatkautschuke als Pfropfgrundlage H.2 sind Emulsionspolymerisate, die einen Gelgehalt von mindestens 60 Gew.-% aufweisen.

Neben Elastomermodifikatoren, die auf Propfpolymeren beruhen, können ebenfalls nicht auf Propfpolymeren basierende Elastomermodifikatoren eingesetzt werden, die Glasübergangstemperaturen < 10°C, vorzugsweise < 0°C, besonders bevorzugt < -20°C aufweisen. Bevorzugt gehören hierzu Elastomere mit einer Blockcopolymerstruktur sowie weiterhin thermoplastisch aufschmelzbare Elastomere, insbesondere EPM-, EPDM- und/oder SEBS-Kautschuke (EPM = Ethylen-Propylen-Copolymer, EPDM = Ethylen-Propylen-Dien-Kautschuk und SEBS = Styrol-Ethen-Buten-Styrol Copolymer).

Bevorzugt als Komponente H) einzusetzende **weitere Flammschutzmittel** sind verschieden von den Komponenten C) und E) sowie halogenfrei.

Zu den als Komponente H) bevorzugt einzusetzenden weiteren phosphorhaltigen Flammschutzmitteln gehören beispielsweise phosphorhaltige Verbindungen aus der Gruppe der anorganischen Metallphosphinate, insbesondere Aluminiumphosphinat und Zinkphosphinat, der mono- und oligomeren Phosphor- und Phosphonsäureester, insbesondere Triphenylphosphat (TPP), Resorcinol-bis-(diphenylphosphat) (RDP), Bisphenol-A-bis-diphenylphosphat (BDP) einschließlich Oligomere, Polyphosphonate, insbesondere Bisphenol A-diphenyl methylphosphonate copolymere wie z. B. Nofia™ HM1100 [CAS Nr. 68664-06-2] der Fa. FRX Polymers, Chelmsford, USA), ferner Derivate der 9,10-Dihydro-9-oxa-10-phosphaphenanthren-10-oxide (DOPO-Derivate)], Phosphonatamine, Metallphosphonate, insbesondere Aluminiumphosphonat und Zinkphosphonat, Phosphinoxide und Phosphazene. Besonders bevorzugte Phosphazene sind dabei Phenoxyphosphazenoligomere. Die Phosphazene und deren Herstellung sind z. B. in EP-A 728 811, DE-A 1961668 und WO-A 97/40092 beschrieben. Besonders bevorzugt werden erfindungsgemäß ringförmige Phenoxyphosphazene wie 2,2,4,4,6,6-Hexahydro-2,2,4,4,6,6-hexaphenoxytriazatriphosphorine [CAS Nr. 1184-10-7] und/oder solche, wie sie z. B. von der Fa. Fushimi Pharmaceutical Co. Ltd, Kagawa, Japan unter der Bezeichnung Rabitle® FP110 [CAS Nr. 1203646-63-2] erhältlich sind, eingesetzt.

Ebenso können von Komponente C) und E) verschiedene weitere stickstoffhaltige Flammschutzmittel einzeln oder im Gemisch als weitere Flammschutzmittel der Komponente H) eingesetzt werden.

Bevorzugt sind Guanidinsalze, insbesondere Guanidincarbonat, Guanidincyanurat prim., Guanidinphosphat prim., Guanidinphosphat sec., Guanidinsulfat prim., Guanidinsulfat sec., Pentaerythritborsäureguanidin, Neopentylglycolborsäureguanidin, Harnstoffphosphat sowie Harnstoffcyanurat. Darüber hinaus können Umsetzungsprodukte von Melem, Melam, Melon mit kondensierten Phosphorsäuren Verwendung finden. Geeignet sind ebenfalls Tris(hydroxyethyl)isocyanurat oder dessen Umsetzungsprodukte mit Carbonsäuren, Benzoguanamin und dessen Addukte bzw. Salze sowie dessen am Stickstoff substituierte Produkte sowie deren Salze und Addukte. Als weitere stickstoffhaltige Komponenten kommen Allantoin-Verbindungen, sowie deren Salze mit Phosphorsäure, Borsäure oder Pyrophosphorsäure sowie Glycolurile oder deren Salze in Frage. Weitere bevorzugte stickstoffhaltige Flammschutzmittel verschieden von Komponente C) und E) sind die Reaktionsprodukte aus Trichlortriazin, Piperazin und Morpholin gemäß CAS Nr. 1078142-02-5, insbesondere MCA PPM Triazin HF der Fa. MCA Technologies GmbH, Biel-Benken, Schweiz.

Auch andere hier nicht speziell erwähnte Flammschutzmittel oder Flammschutzmittelsynergisten können als Komponente H) zum Einsatz kommen. Hierzu zählen auch rein anorganische Phosphorverbindungen verschieden von Komponente B), insbesondere roter Phosphor oder Borphosphathydrat. Ferner können auch mineralische Flammschutzadditive oder Salze aliphatischer und aromatischer Sulfonsäuren, insbesondere Metallsalze der 1-Perfluorbutansulfonsäure eingesetzt werden. Infrage kommen ferner Flammschutzmittelsynergisten aus der Gruppe der sauerstoff-, stickstoff- oder schwefelhaltigen Metallverbindungen worin Metall für Antimon, Zink, Molybdän, Calcium, Titan, Magnesium oder Bor steht, bevorzugt Antimontrioxid, Antimonpentoxid, Natriumantimonat, Zinkoxid, Zinkborat, Zinkstannat, Zinkhydroxystannat, Zinksulfid, Molybdänoxid, sofern nicht bereits als Farbmittel eingesetzt Titandioxid, Magnesiumcarbonat, Calciumcarbonat, Calciumoxid, Titannitrid, Bornitrid, Magnesiumnitrid, Zinknitrid, Calciumborat, Magnesiumborat oder deren Mischungen.

Weitere bevorzugt als Komponente H) einzusetzende und geeignete Flammschutzadditive sind Kohlebildner, besonders bevorzugt Poly-(2,6-diphenyl-1,4-phenyl)ether, insbesondere Poly(2,6-dimethyl-1,4-phenylen)ether [CAS Nr. 25134-01-4], Phenol-Formaldehydharze, Polycarbonate, Polyimide, Polysulfone, Polyethersulfone oder Polyetherketone, sowie Antitropfmittel, insbesondere Tetrafluorethylenpolymerisate. Die Tetrafluorethylenpolymerisate können in Reinform oder aber in Kombination mit anderen Harzen, bevorzugt Styrolacrylnitril (SAN), oder Acrylaten, vorzugsweise Methylmethacrylat bzw. Butylacrylat, eingesetzt werden. Ein insbesondere bevorzugt geeignetes Beispiel für Tetrafluorethylen-Styrolacrylnitril-Harze ist z. B. Cycolac® INP 449 [CAS Nr. 1427364-85-9] der Fa. Sabic Corp., Riad, Saudi

Arabien; ein insbesondere bevorzugt geeignetes Beispiel für Tetrafluorethylen-Acrylat-Harze ist z. B. Metablen A3800 [CAS Nr. 639808-21-2] der Fa. Mitsubishi Rayon Co., Ltd., Tokio, Japan. Antitropfmittel enthaltend Tetrafluorethylenpolymerisate werden erfindungsgemäß als Komponente H) bevorzugt in Mengen im Bereich von 0,01 bis 5 Massenanteilen, besonders bevorzugt im Bereich von 0,05 bis 2 Massenanteilen jeweils bezogen auf 100 Massenanteile der Komponente A) eingesetzt.

Sofern es der Einsatz erfordert, können in einer Ausführungsform der vorliegenden Erfindung als Komponente H) auch **halogenhaltige Flammschutzmittel** eingesetzt werden, die von den Komponenten C) und E) verschieden sind. Hierzu zählen handelsübliche organische Halogenverbindungen mit oder ohne Synergisten. Als halogenhaltige, insbesondere bromierte und chlorierte Verbindungen seien bevorzugt Ethylen-1,2-bistetrabromphthalimid, Decabromdiphenylethan, Tetrabrombisphenol-A-epoxyoligomer, Tetrabrombisphenol-A-oligocarbonat, Tetrachlorbisphenol-A-oligocarbonat, Polypentabrombenzylacrylat, bromiertes Polystyrol und bromierte Polyphenylenether genannt.

Die als Komponente H) zusätzlich einzusetzenden Flammschutzmittel können in Reinform, sowie über Masterbatche oder Kompaktate dem Polyalkylentherephthalat oder Polycycloalkylenterephthalat zugesetzt werden.

Als Komponente H) bevorzugt einzusetzende **Thermostabilisatoren** sind ausgewählt aus der Gruppe der schwefelhaltigen Stabilisatoren, insbesondere Sulfide, Dialkylthiocarbamaten oder Thiodipropionsäuren, außerdem solche ausgewählt aus der Gruppe der Eisensalze und der Kupfersalze, hier insbesondere Kupfer(I)iodid, die bzw. das bevorzugt in Kombination mit Kaliumiodid und/oder Natriumhypophosphit $NaH_2PO_2$ eingesetzt werden bzw. wird, ferner sterisch gehinderte Amine, insbesondere Tetrametyhlpiperidin-Derivate, aromatische sekundäre Amine, insbesondere Diphenylamine, Hydrochinone, substituierte Resorcine, Salicylate, Benzotriazole und Benzophenone, ferner sterisch gehinderte Phenole und aliphatisch oder aromatisch substituierte Phosphite sowie verschieden substituierte Vertreter dieser Gruppen.

Unter den sterisch gehinderten Phenolen werden bevorzugt solche mit mindestens einem 3-Tert.-butyl-4-hydroxy-5-methylphenyl- und/oder mindestens einem 3,5-Di-(tert.-butyl-4-hydroxyphenyl)-Baustein eingesetzt, wobei 1,6-Hexandiol-bis[3-(3,5-di-tert.-butyl-4-hydroxyphenyl)-propionat] [CAS Nr. 35074-77-2] (Irganox® 259 der Fa. BASF SE, Ludwigshafen, Deutschland), Pentaerythril-tetrakis-[3-(3,5-di-tert.-butyl-4-hydroxyphenyl)-propionat] [CAS Nr. 6683-19-8] (Irganox® 1010 der Fa. BASF SE) und 3,9-Bis[2-[3-(3-tert-butyl-4-hydroxy-5-methylphenyl)propionyloxy]-1,1-dimethylethyl]-2,4,8,10-tetraoxaspiro[5.5]undecane [CAS Nr. 90498-90-1] (ADK Stab® AO 80) besonders bevorzugt sind. ADK Stab® AO 80 ist ein Handelsprodukt der Fa. Adeka-Palmerole SAS, Mulhouse, Frankreich.

Unter den aliphatisch oder aromatisch substituierten Phosphiten wird bevorzugt Bis(2,4-dicumylphenyl)-pentaerythritol-diphosphit [CAS Nr. 154862-43-8], das z. B. von der Fa. Dover Chemical Corp., Dover, USA unter dem Handelsnamen Doverphos® S9228 angeboten wird und Tetrakis(2,4-di-tert-butylphenyl)-1,1-biphenyl-4,4'-diylbisphosphonit [CAS Nr. 38613-77-3] eingesetzt, das z. B. als Hostanox® P-EPQ von der Fa. Clariant International Ltd., Muttenz, Schweiz bezogen werden kann.

In bevorzugter Ausführungsform betrifft die vorliegende Erfindung Zusammensetzungen und daraus herzustellende Formmassen sowie Erzeugnisse enthaltend A) Polybutylenterepthalat, B) Aluminium-tris(diethylphosphinat), C) Melem und D) Magnesiumdihydrogenphosphat.

In bevorzugter Ausführungsform betrifft die vorliegende Erfindung zudem Zusammensetzungen und daraus herzustellende Formmassen sowie Erzeugnisse enthaltend A) Polybutylenterepthalat, B) Aluminium-tris(diethylphosphinat), C) Melem und D) Zinkdihydrogenphosphat-dihydrat.

In bevorzugter Ausführungsform betrifft die vorliegende Erfindung zudem Zusammensetzungen und daraus herzustellende Formmassen sowie Erzeugnisse enthaltend A) Polybutylenterepthalat, B) Aluminium-tris(diethylphosphinat), C) Melem, D) Magnesiumdihydrogenphosphat und E) Melamincyanurat.

In bevorzugter Ausführungsform betrifft die vorliegende Erfindung zudem Zusammensetzungen und daraus herzustellende Formmassen sowie Erzeugnisse enthaltend A) Polybutylenterepthalat, B) Aluminium-tris(diethylphosphinat), C) Melem, D) Magnesiumdihydrogenphosphat, E) Melamincyanurat und F) Bariumsulfat.

In bevorzugter Ausführungsform betrifft die vorliegende Erfindung zudem Zusammensetzungen und daraus herzustellende Formmassen sowie Erzeugnisse enthaltend A) Polybutylenterepthalat, B) Aluminium-tris(diethylphosphinat), C) Melem, D) Magnesiumdihydrogenphosphat, E) Melamincyanurat, F) Bariumsulfat und G) Glasfasern, vorzugsweise Glasfasern aus E-Glas, besonders bevorzugt Glasfasern mit einem mittleren Faserdurchmesser im Bereich 10 bis 12$\mu$m und/oder mit einer mittleren Faserlänge von 4,5mm.

**Verwendung**

Die vorliegende Erfindung betrifft aber auch die Verwendung der Komponenten B), C) und D) zur Herstellung Polyester basierter Zusammensetzungen, Formmassen und Erzeugnisse, vorzugsweise kriechstromfester Erzeugnisse, besonders bevorzugt elektrischer oder elektronischer Baugruppen und Komponenten, wobei der Polyester aus der Gruppe der Polyalkylentherephthalate und Polycycloalkylenterephthalate ausgewählt wird.

Die vorliegende Erfindung betrifft aber auch die Verwendung der Komponenten B), C) und D) zur Steigerung

der Kriechstromfestigkeit Polyester basierter Erzeugnisse, bevorzugt von Erzeugnissen der Elektro- oder Elektronikindustrie, wobei als Polyester wenigstens ein Polyalkylenterephthalat und/oder wenigstens ein Polycycloalkylenterephthalat, insbesondere wenigstens Polybutylenterephthalat eingesetzt wird.

**Verfahren**

Die Zubereitung erfindungsgemäßer Formmassen für eine weitere Nutzung erfolgt durch Mischen wenigstens der Komponenten A), B), C) und D) in wenigstens einem Mischwerkzeug, vorzugsweise Compounder. Hierdurch werden als Zwischenprodukte, auf den erfindungsgemäßen Zusammensetzungen basierende, Formmassen erhalten. Aus den Formmassen werden schließlich durch geeignete Verfahren Erzeugnisse hergestellt.

Die vorliegende Erfindung betrifft aber auch ein Verfahren zur Herstellung von Erzeugnissen, bevorzugt für die Elektro- oder Elektronikindustrie, besonders bevorzugt elektronischer oder elektrischer Baugruppen und Komponenten, indem man erfindungsgemäße Zusammensetzungen zu einer Formmasse vermischt, in Form eines Strangs austrägt, bis zur Granulierfähigkeit abkühlt und granuliert und schließlich als Matrixmaterial einem Spritzguss oder einer Extrusion, bevorzugt einem Spritzguss, unterzieht. In einer Ausführungsform kann die Formmasse unmittelbar dem Spritzguss oder einer Extrusion zugeführt werden, ohne dass sie zu einem Strang ausgetragen und granuliert wird.

Bevorzugt erfolgt das Vermischen bei Temperaturen im Bereich von 240 bis 310°C, bevorzugt im Bereich von 260 bis 300°C, besonders bevorzugt im Bereich von 270 bis 295°C in der Schmelze. Insbesondere bevorzugt wird hierzu ein Zweiwellenextruder eingesetzt.

In einer Ausführungsform wird das Granulat, das die erfindungsgemäße Zusammensetzung enthält, getrocknet, bevorzugt bei Temperaturen im Bereich um 120°C im Vakuumtrockenschrank oder im Trockenlufttrockner für eine Zeitdauer im Bereich von 2h, bevor es als Matrixmaterial dem Spritzguss oder einem Extrusionsverfahren zwecks Herstellung erfindungsgemäßer Erzeugnisse unterzogen wird.

Die vorliegende Erfindung betrifft aber auch ein Verfahren zur Verbesserung der Kriechstromfestigkeit Polyester basierter Erzeugnisse, indem man wenigstens die Komponenten B), C) und D) zusammen mit Komponente A) als Zusammensetzungen zu Formmassen verarbeitet und diese einem Spritzguss oder einer Extrusion unterzieht, wobei als Polyester wenigstens ein Polyalkylenterephthalat und/oder wenigstens ein Polycycloalkylenterephtalat, insbesondere wenigstens Polybutylenterephthalat eingesetzt wird.

Die Verfahren des Spritzgusses sowie der Extrusion thermoplastischer Formmassen sind dem Fachmann bekannt.

Erfindungsgemäße Verfahren zur Herstellung von Polyester basierten Erzeugnissen durch Extrusion oder Spritzguss arbeiten bei Schmelzetemperaturen im Bereich von 240 bis 330°C, bevorzugt im Bereich von 260 bis 300°C, besonders bevorzugt im Bereich von 270 bis 290°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar.

Bei der sequentiellen Coextrusion werden zwei unterschiedliche Materialien in alternierender Folge hintereinander ausgestoßen. Auf diese Weise entsteht ein Vorformling mit in Extrusionsrichtung abschnittsweise unterschiedlicher Materialzusammensetzung. Es können bestimmte Artikelabschnitte durch entsprechende Materialauswahl mit spezifisch erforderlichen Eigenschaften ausgestattet werden, beispielsweise für Artikel mit weichen Enden und hartem Mittelteil oder integrierten weichen Faltenbalg-Bereichen (Thielen, Hartwig, Gust, "Blasformen von Kunststoffhohlkörpern", Carl Hanser Verlag, München 2006, Seiten 127-129).

Das Verfahren des Spritzgusses zeichnet sich dadurch aus, dass eine die erfindungsgemäßen Zusammensetzungen enthaltende Formmasse, bevorzugt in Granulatform, in einem beheizten zylindrischen Hohlraum aufgeschmolzen (plastifiziert) und als Spritzmasse unter Druck in einen temperierten Hohlraum gespritzt wird. Nach dem Abkühlen (Erstarren) der Masse wird das Spritzgussteil entformt.

Man unterscheidet

1. Plastifizieren / Aufschmelzen

2. Einspritzphase (Füllvorgang)

3. Nachdruckphase (wegen thermischer Kontraktion bei der Kristallisation)

4. Entformen.

Siehe hierzu http://de.wikipedia.org/wiki/Spritzgie%C3%9Fen. Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Erzeugnis gefertigt. Notwendig dazu sind immer zwei Werkzeughälften. Beim Spritzguss unterscheidet man folgende Funktionskomplexe:

- Angusssystem
- Formbildende Einsätze
- Entlüftung
- Maschinen- und Kraftaufnahme
- Entformungssystem und Bewegungsübertragung
- Temperierung

Im Gegensatz zum Spritzguss wird bei der Extrusion ein endlos geformter Kunststoffstrang aus einer erfindungsgemäßen Formmasse im Extruder eingesetzt, wobei der Extruder eine Maschine zur Herstellung thermoplastischer Formstücke ist. Verwiesen sei hier auf http://de.wikipedia.org/wiki/Extrusionsblasformen. Man unterscheidet Einschneckenextruder und Doppelschneckenextruder sowie die jeweiligen Untergruppen konventioneller Einschneckenextruder, förderwirksamer Einschneckenextruder, gegenläufiger Doppelschneckenextruder und gleichläufiger Doppelschneckenextruder.

Extrusionsanlagen bestehen aus Extruder, Werkzeug, Nachfolgeeinrichtung, Extrusionsblasformen. Extrusionsanlagen zum Herstellen von Profilen bestehen aus: Extruder, Profil-Werkzeug, Kalibrierung, Kühlstrecke, Raupen- und Rollenabzug, Trennvorrichtung und Kipprinne.

Die vorliegende Erfindung betrifft folglich auch Erzeugnisse, insbesondere kriechstromfeste Erzeugnisse, erhältlich durch Extrusion, bevorzugt Profil-Extrusion, oder Spritzguss der aus den erfindungsgemäßen Zusammensetzungen erhältlichen Formmassen.

**Beispiele**

Zum Nachweis der erfindungsgemäß beschriebenen Verbesserungen bei Glühdrahtbeständigkeit und Mechanik wurden zunächst durch Compoundierung entsprechende Formmassen angefertigt. Die einzelnen Komponenten wurden hierzu in einem Zweiwellenextruder (ZSK 26 Mega Compounder der Fa. Coperion Werner & Pfleiderer (Stuttgart, Deutschland)) bei Temperaturen im Bereich von 260 bis 290°C gemischt, als Strang ausgetragen, bis zur Granulierfähigkeit abgekühlt und granuliert. Nach dem Trocknen (in der Regel 2h bei 120°C im Vakuumtrockenschrank) erfolgte die Verarbeitung des Granulates zu Prüfkörpern.

Die Prüfkörper für die in **Tabelle 1** aufgeführten Untersuchungen wurden auf einer Spritzgießmaschine des Typs Arburg 320-210-500 bei einer Massetemperatur von 260°C und einer Werkzeugtemperatur von 80°C verspritzt:

- Prüfstäbe 80mm • 10mm • 4 mm (gem. ISO 178 bzw. ISO180/1U)
- Prüfkörper für die Glühdrahtprüfung nach IEC 60695-2-13

Die Biegefestigkeit erhielt man aus Biegeversuchen gemäß ISO178 an Prüfkörpern der Abmessung 80 mm • 10 mm • 4 mm.

Die Schlagzähigkeit erhielt man nach IZOD gemäß ISO180-1U an Prüfkörpern der Abmessung 80 mm • 10 mm • 4 mm.

Die Glühdrahtbeständigkeit wurde anhand der Glühdrahtentzündlichkeitsprüfung GWIT (Glow-Wire-Ignition-Temperature) gemäß IEC 60695-2-13 bestimmt. Bei der GWIT-Prüfung wird die Glühdrahtentzündungstemperatur angegeben, die 25K (bzw. 30K bei Temperaturen im Bereich von 900°C bis 960°C) höher ist, als die maximale Glühdrahttemperatur, die in 3 aufeinander folgenden Tests auch während der Einwirkzeit des Glühdrahtes nicht zur Entzündung führt. Als Entzündung gilt dabei eine Flamme mit Brennzeit ≥ 5sec. Für die Prüfungen wurden Rundplatten mit einem Durchmesser von 80mm und einer Dicke von 0,75mm verwendet. Im Hinblick der dieser Erfindung zugrundeliegenden Aufgabenstellung mit dem Ziel gar keiner Entzündung, d.h. einer Brennzeit von 0 Sekunden, wurde zusätzlich zur Klassifizierung nach IEC 60695-2-13 auch die Brennzeit bei einer Glühdrahttemperatur von 800°C angegeben.

Die Schmelzviskosität wurde als Schmelze-Volumenfließrate (engl. MVR = Melt Volume-flow Rate" in Anlehnung an ISO1133-1 bei einer Temperatur von 260°C mit einem Auflagegewicht von jeweils 2,16kg am Granulat bestimmt. Bei vergleichbarer Ausgangsviskosität des eingesetzten Polymers ist der MVR ein Maß für den Abbau des Polymers infolge thermischer Belastung. Eine hohe Zahl für den MVR steht für eine niedrige Schmelzviskosität und damit einen stärkeren thermischen Abbau.

**Edukte:**

**Komponente A):** Lineares Polybutylenterephthalat (Pocan® B 1300, Handelsprodukt der Lanxess Deutschland GmbH, Leverkusen, Deutschland) mit einer Intrinsischen Viskosität von 93 $cm^3/g$ (gemessen in Phenol : 1,2-Dichlorbenzol = 1:1 bei 25°C)

**Komponente B):** Aluminium-tris(diethylphosphinat), [CAS Nr. 225789-38-8] (Exolit® OP1230 der Fa. Clariant SE, Muttenz, Schweiz)

**Komponente C)** Melem [CAS Nr. 1502-47-2] mit einem Melamingehalt <1% (Delacal NFR der Fa. Delamin Ltd., Derby, UK)

**Komponente D):** Magnesium-bis(dihydrogenphosphat) [CAS Nr.13092-66-5]

**Komponente E):** Melamincyanurat, (Melapur® MC25, der Fa. BASF SE, Ludwigshafen, Deutschland)

**Komponente F):** Bariumsulfat [CAS Nr. 7727-43-7] (BLANC FIXE Super F der Fa. Sachtleben Chemie GmbH, Duisburg, Deutschland)

**Komponente G):** Mit silanhaltigen Verbindungen beschlichtete Glasfaser mit einem Durchmesser von 10 μm (CS 7967, Handelsprodukt der Lanxess N.V., Antwerpen, Belgien)

Als weitere Additive der **Komponente H)** wurden in den Beispielen als Komponente H/1) die folgenden, für die Verwendung in flammgeschützten thermoplastischen Polyestern gebräuchlichen Komponenten eingesetzt:

Entformungsmittel: Pentaerythrit-tetrastearat (PETS) [CAS Nr. 115-83-3] (Loxiol® VPG 861, Fa. Cognis Deutschland GmbH, Düsseldorf, Deutschland)

Thermostabilisator: Tetrakis(2,4-di-tert-butylphenyl)-1,1-biphenyl-4,4'-diylbisphosphonit [CAS Nr. 38613-77-3] (Hostanox® P-EPQ von der Fa. Clariant International Ltd., Muttenz, Schweiz)

Additiv: Polytetrafluorethylen, [CAS Nr. 9002-84-0] (Dyneon® PA 5932 der Fa. Dyneon GmbH & Co KG, Neuss, Deutschland)

Die verwendeten weiteren Additive (Komponente H/1) stimmen für entsprechenden Vergleichsbeispiele und Beispiele jeweils in Art und Menge überein.

**Tabelle** 1

| | | Bsp. 1 | Vgl. 1 | Vgl. 2 |
|---|---|---|---|---|
| Komponente A/1 | [Massenanteile] | 100,0 | 100,0 | 100,0 |
| Komponente B/1 | [Massenanteile] | 31,3 | 31,0 | 27,5 |

(fortgesetzt)

| | | Bsp. 1 | Vgl. 1 | Vgl. 2 |
|---|---|---|---|---|
| Komponente C/1 | [Massenanteile] | 12,9 | 12,8 | 0,0 |
| Komponente D/1 | [Massenanteile] | 0,6 | 0,0 | 0,0 |
| Komponente E/1 | [Massenanteile] | 12,9 | 12,8 | 11,4 |
| Komponente F/1 | [Massenanteile] | 2,6 | 2,6 | 2,3 |
| Komponente G/1 | [Massenanteile] | 53,9 | 53,5 | 47,4 |
| Komponente H/1 | [Massenanteile] | 1,3 | 1,3 | 1,1 |
| GWIT (IEC 60695-2-13) | [°C] | ≥825 | ≥825 | < 825 |
| IEC60695-2-13: Brennzeit bei 800°C | [s] | 0 | 0 | >5 |
| MVR260/2,16/5 | [$cm^3$/10min] | 10,5 | 19,8 | 23,2 |
| IZOD | kJ/$m^2$] | > 20 | 14 | > 20 |
| Biegefestigkeit | [MPa] | > 145 | 124 | > 145 |

Als Maß für die Schädigung in der Schmelze wurden die MVR-Messungen nach ISO1133 an einem Fließprüfgerät B4106.200 der Firma Zwick/Roell nach 5 Minuten Verweilzeit durchgeführt. Die Prüfung nach 5minütiger Verweilzeit im Fließprüfgerät erlaubte eine vergleichende Beurteilung des Abbaus in der Schmelze während der vorausgegangenen Compoundierung im Zweiwellenextruder.

Der trotz gleicher Komponente A) niedrigere, gemäß ISO1133 bei 260°C und mit einem Gewicht von 2,16 kg bestimmte MVR-Wert in Bsp. 1 ist gegenüber den höheren MVR Werten der Vgl. 1 und Vgl. 2 ein Beleg für einen geringeren Polymerabbau bei Verwendung der erfinderischen Kombination enthaltend Komponente C/1 und Komponente D/1. Fehlt mindestens eine der beiden genannten Komponenten, so ist nicht nur der MVR-Wert höher, sondern darüber hinaus auch entweder die Mechanik oder die Glühdrahtbeständigkeit unzureichend im Hinblick auf die erfindungsgemäß gestellte Aufgabe.

**Patentansprüche**

**1.** Zusammensetzungen, Formmassen und Erzeugnisse enthaltend

A) wenigstens ein Polyalkylenterephthalat oder Polycycloalkylenterephthalat,
B) wenigstens ein organisches Phosphinsäuresalz der Formel (I) und/oder wenigstens ein organisches Diphosphinsäuresalz der Formel (II) und/oder deren Polymere,

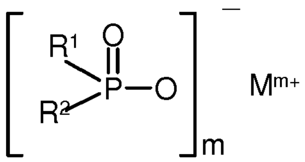 (I) 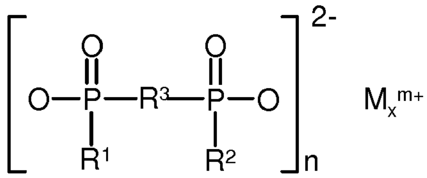 (II)

worin

$R^1$, $R^2$ gleich oder verschieden sind und jeweils für ein lineares oder verzweigtes $C_1$-$C_6$-Alkyl, und/oder für $C_6$-$C_{14}$-Aryl stehen,
$R^3$ für lineares oder verzweigtes $C_1$-$C_{10}$-Alkylen, $C_6$-$C_{10}$-Arylen oder für $C_1$-$C_6$-Alkyl-$C_6$-$C_{10}$-arylen oder $C_6$-$C_{10}$-Aryl-$C_1$-$C_6$-alkylen steht,
M für Aluminium, Zink oder Titan steht,
m für eine ganze Zahl im Bereich von 1 bis 4 steht;
n für eine ganze Zahl im Bereich von 1 bis 3 steht, und
x für 1 oder 2 steht,

wobei n, x und m in Formel (II) gleichzeitig nur solche ganzen Zahlen annehmen können, dass das Diphosphinsäuresalz der Formel (II) als Ganzes ungeladen ist,

C) wenigstens ein kondensiertes Melamin-Derivat und
D) wenigstens ein anorganisches Phosphatsalz aus der Gruppe der Metallhydrogenphosphate, der Metalldihydrogenphosphate, der Metalldihydrogenpyrophosphate und/oder der Metallpyrophosphate, wobei Metall für Natrium, Kalium, Magnesium, Zink, Kupfer und/oder Aluminium steht.

**2.** Zusammensetzungen, Formmassen und Erzeugnisse gemäß Anspruch 1, **dadurch gekennzeichnet, dass** diese bezogen auf 100 Massenanteile der Komponente A)

10 bis 70 Massenanteile der Komponente B),
1 bis 30 Massenanteile der Komponente C) und
0,01 bis 5 Massenanteile der Komponente D) enthalten.

**3.** Zusammensetzungen, Formmassen und Erzeugnisse gemäß Anspruch 1 oder 2, **dadurch gekennzeichnet, dass** diese zusätzlich zu den Komponenten A) bis D) noch **E)** wenigstens ein von Komponente C) verschiedenes **Melaminderivat,** vorzugsweise in Mengen im Bereich von 2 bis 50 Massenanteilen, bezogen auf 100 Massenanteile der Komponente A), enthalten.

**4.** Zusammensetzungen, Formmassen und Erzeugnisse gemäß einem der Ansprüche 1 bis 3, **dadurch gekennzeichnet, dass** diese zusätzlich zu den Komponenten A) bis E) oder anstelle von E) noch **F)** wenigstens ein **Metallsulfat,** vorzugsweise in Mengen im Bereich von 1 bis 40 Massenanteilen, bezogen auf 100 Massenanteile der Komponente A), enthalten.

**5.** Zusammensetzungen, Formmassen und Erzeugnisse gemäß einem der Ansprüche 1 bis 4, **dadurch gekennzeichnet, dass** diese zusätzlich zu den Komponenten A) bis F) oder anstelle von E) und/oder F) noch **G)** wenigstens einen von den Komponenten B) bis F) verschiedenen **Füllstoff oder Verstärkungsstoff,** vorzugsweise in Mengen im Bereich von 0,1 bis 300 Massenanteilen, bezogen auf 100 Massenanteile der Komponente A), enthalten.

**6.** Zusammensetzungen, Formmassen und Erzeugnisse gemäß einem der Ansprüche 1 bis 5, **dadurch gekennzeichnet, dass** diese zusätzlich zu den Komponenten A) bis G) oder anstelle von E) und/oder F) und/oder G) noch **H)** wenigstens ein weiteres von den Komponenten B) bis G) verschiedenes **Additiv,** vorzugsweise in Mengen im Bereich von 0,01 bis 80 Massenanteilen, bezogen auf 100 Massenanteile der Komponente A), enthalten.

**7.** Zusammensetzungen, Formmassen und Erzeugnisse gemäß einem der Ansprüche 1 bis 6, **dadurch gekennzeichnet, dass** als Komponente C) Melam, Melem oder Melon, sowie deren Mischungen eingesetzt werden, insbesondere Melem.

**8.** Zusammensetzungen, Formmassen und Erzeugnisse gemäß einem der Ansprüche 1 bis 7, **dadurch gekennzeichnet, dass** als Metalle der Komponente D) Magnesium, Calcium, Zink, oder Aluminium eingesetzt werden, vorzugsweise Magnesium und/oder Zink, insbesondere Magnesium.

**9.** Zusammensetzungen, Formmassen und Erzeugnisse gemäß einem der Ansprüche 1 bis 7, **dadurch gekennzeichnet, dass** als Komponente D) anorganische Phosphatsalze mit einem pH-Wert im Bereich von 2 bis 6,5, eingesetzt werden, wobei sich die Angaben des pH-Wertes auf ein wässriges Medium bei 20°C und einer Phosphatsalz Konzentration von 10 g pro Liter beziehen.

**10.** Zusammensetzungen, Formmassen und Erzeugnisse gemäß einem der Ansprüche 1 bis 9, **dadurch gekennzeichnet, dass** als Komponente D) Magnesiumpyrophosphat oder Zinkpyrophosphat eingesetzt werden, Insbesondere Zinkpyrophosphat.

**11.** Zusammensetzungen, Formmassen und Erzeugnisse gemäß einem der Ansprüche 1 bis 9, **dadurch gekennzeichnet, dass** als Komponente D) Magnesiumhydrogenphosphat, Zinkhydrogenphosphat oder Calciumhydrogenphosphat eingesetzt wird.

**12.** Zusammensetzungen, Formmassen und Erzeugnisse gemäß einem der Ansprüche 1 bis 9, **dadurch gekennzeichnet, dass** als Komponente D) Aluminiumdihydrogenphosphat, Magnesium-bis(dihydrogenphosphat), Zink-bis(dihydrogenphosphat) oder Zink-bis(dihydrogenphosphat)-dihydrat eingesetzt wird, vorzugsweise Magnesium-bis(dihydrogenphosphat) oder Zink-bis(dihydrogen-phosphat)-dihydrat, insbesondere Magnesium-bis(dihydrogenphosphat).

**13.** Zusammensetzungen, Formmassen und Erzeugnisse gemäß einem der Ansprüche 1 bis 9, **dadurch gekennzeichnet, dass** die Verbindungen der Komponente D) in Form von Mischungen mit Calciumpyrophosphat oder mit Calciumhydrogenphosphat bzw. Calciumhydrogenphosphat-Dihydrat eingesetzt werden.

**14.** Verwendung der Komponente B) wenigstens ein organisches Phosphinsäuresalz der Formel (I) und/oder wenigstens ein organisches Diphosphinsäuresalz der Formel (II) und/oder deren Polymere,

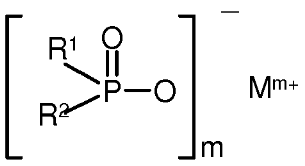 (I) 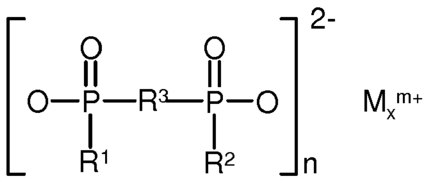 (II)

worin

$R^1$, $R^2$ gleich oder verschieden sind und jeweils für ein lineares oder verzweigtes $C_1$-$C_6$-Alkyl, und/oder für $C_6$-$C_{14}$-Aryl stehen,
$R^3$ für lineares oder verzweigtes $C_1$-$C_{10}$-Alkylen, $C_6$-$C_{10}$-Arylen oder für $C_1$-$C_6$-Alkyl-$C_6$-$C_{10}$-arylen oder $C_6$-$C_{10}$-Aryl-$C_1$-$C_6$-alkylen steht,
M für Aluminium, Zink oder Titan steht,
m für eine ganze Zahl im Bereich von 1 bis 4 steht;
n für eine ganze Zahl im Bereich von 1 bis 3 steht, und
x für 1 oder 2 steht,
wobei n, x und m in Formel (II) gleichzeitig nur solche ganzen Zahlen annehmen können, dass das Diphosphinsäuresalz der Formel (II) als Ganzes ungeladen ist,
mit Komponente C), wenigstens einem kondensierten Melamin-Derivat und
Komponente D), wenigstens einem anorganischen Phosphatsalz aus der Gruppe der Metallhydrogenphosphate, der Metalldihydrogenphosphate, der Metalldihydrogenpyrophosphate und/oder der Metallpyrophosphate, wobei Metall für Natrium, Kalium, Magnesium, Zink, Kupfer und/oder Aluminium steht,
zur Herstellung Polyester basierter Zusammensetzungen, Formmassen und Erzeugnisse, vorzugsweise kriechstromfester Erzeugnisse, besonders bevorzugt elektrischer oder elektronischer Baugruppen und Komponenten, wobei der Polyester aus der Gruppe der Polyalkylentherephthalate und Polycycloalkylenterephthalate ausgewählt wird.

**15.** Verfahren zur Herstellung von Erzeugnissen, bevorzugt für die Elektro- oder Elektronikindustrie, besonders bevorzugt elektronischer oder elektrischer Baugruppen und Komponenten, **dadurch gekennzeichnet, dass** man Zusammensetzungen gemäß einem der Ansprüche 1 bis 13 zu einer Formmasse vermischt, in Form eines Strangs austrägt, bis zur Granulierfähigkeit abkühlt und granuliert und schließlich als Matrixmaterial einem Spritzguss oder einer Extrusion, bevorzugt einem Spritzguss, unterzieht.

Europäisches Patentamt
European Patent Office
Office européen des brevets

# EUROPÄISCHER RECHERCHENBERICHT

Nummer der Anmeldung
EP 16 18 6758

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 11 2006 001824 T5 (POLYPLASTICS CO [JP]) 15. Mai 2008 (2008-05-15)<br>* Absatz [0086]; Ansprüche 1, 4, 7-9, 16; Beispiel 54 *<br>----- | 1-15 | INV.<br>C08K5/3492<br>C08K5/52<br>C08K5/5313 |
| E | EP 3 067 387 A1 (LANXESS DEUTSCHLAND GMBH [DE]) 14. September 2016 (2016-09-14)<br>* Absatz [0052]; Ansprüche 1, 2, 9; Beispiele 1, 2 *<br>----- | 1,2,4-9, 11,12, 14,15 | |
| | | | RECHERCHIERTE SACHGEBIETE (IPC) |
| | | | C08K<br>C08L |

Der vorliegende Recherchenbericht wurde für alle Patentansprüche erstellt

1

| Recherchenort | Abschlußdatum der Recherche | Prüfer |
|---|---|---|
| München | 7. Februar 2017 | Scheid, Günther |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 16 18 6758

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-02-2017

| Im Recherchenbericht angeführtes Patentdokument | Datum der Veröffentlichung | Mitglied(er) der Patentfamilie | Datum der Veröffentlichung |
|---|---|---|---|
| DE 112006001824 T5 | 15-05-2008 | CN 101218305 A | 09-07-2008 |
| | | DE 112006001824 T5 | 15-05-2008 |
| | | JP 5186210 B2 | 17-04-2013 |
| | | WO 2007007663 A1 | 18-01-2007 |
| EP 3067387 A1 | 14-09-2016 | CN 105949729 A | 21-09-2016 |
| | | EP 3067387 A1 | 14-09-2016 |
| | | EP 3133112 A1 | 22-02-2017 |
| | | JP 2016166358 A | 15-09-2016 |
| | | KR 20160110160 A | 21-09-2016 |
| | | US 2016264774 A1 | 15-09-2016 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 112007001618 T5
- EP 2927279 A1
- DE 112006001824 T5
- WO 0194472 A1
- DE 10324098 A1
- WO 2004009315 A1
- WO 2007116022 A2
- WO 9739053 A
- WO 2012025362 A1
- EP 2609173 A1
- WO 2008023074 A1
- DE 2035390 A
- DE 2248242 A
- US 4937285 A
- DE 3704657 A
- DE 3704655 A
- DE 3631540 A
- DE 3631539 A
- EP 728811 A
- DE 1961668 A
- WO 9740092 A


### In der Beschreibung aufgeführte Nicht-Patentliteratur


- Test for Flammability of Plastic Materials for Parts in Devices and Appliances. Standard of Safety. Underwriters Laboratories Inc, 1998, S.14-S.18
- **BODO CARLOWITZ.** Tabellarische Übersicht über die Prüfung von Kunststoffen. Giesel-Verlag für Publizität, 1992, 16-17
- Chemie Ingenieur Technik. Wiley-VCH Verlags GmbH, 2000, vol. 72, 273-276
- **C.M. KECK.** Moderne Pharmazeutische Technologie 2009. Freie Universität, 06. Juni 2007, 1-16
- Kunststoff-Handbuch. Hanser Verlag, 1973, vol. VIII, 695ff
- *CHEMICAL ABSTRACTS,* 25038-59-9
- *CHEMICAL ABSTRACTS,* 24968-12-5
- *CHEMICAL ABSTRACTS,* 225789-38-8
- *CHEMICAL ABSTRACTS,* 3576-88-3
- *CHEMICAL ABSTRACTS,* 1502-47-2
- *CHEMICAL ABSTRACTS,* 32518-77-7
- *CHEMICAL ABSTRACTS,* 13446-24-7
- *CHEMICAL ABSTRACTS,* 7446-26-6
- *CHEMICAL ABSTRACTS,* 7757-86-0
- *CHEMICAL ABSTRACTS,* 7664-38-2
- *CHEMICAL ABSTRACTS,* 7789-77-7
- *CHEMICAL ABSTRACTS,* 13530-50-2
- *CHEMICAL ABSTRACTS,* 13092-66-5
- *CHEMICAL ABSTRACTS,* 13598-37-3
- *CHEMICAL ABSTRACTS,* 13986-21-5
- *CHEMICAL ABSTRACTS,* 7790-76-3
- *CHEMICAL ABSTRACTS,* 218768-84-4
- *CHEMICAL ABSTRACTS,* 37640-57-6
- *CHEMICAL ABSTRACTS,* 7778-18-9
- *CHEMICAL ABSTRACTS,* 7487-88-9
- *CHEMICAL ABSTRACTS,* 7727-43-7
- **M. SCHOßIG.** Schädigungsmechanismen in faserverstärkten Kunststoffen. Vieweg und Teubner Verlag, 2011, vol. 1, 35
- *CHEMICAL ABSTRACTS,* 65997-17-3
- **J.KASTNER et al.** Quantitative Messung von Faserlängen und -verteilung in faserverstärkten Kunststoffteilen mittels μ-Röntgen-Computertomographie. *DGZfP-Jahrestagung,* 2007
- *CHEMICAL ABSTRACTS,* 68604-44-4
- *CHEMICAL ABSTRACTS,* 85116-93-4
- *CHEMICAL ABSTRACTS,* 1592-23-0
- *CHEMICAL ABSTRACTS,* 74388-22-0
- *CHEMICAL ABSTRACTS,* 115-83-3
- *CHEMICAL ABSTRACTS,* 13463-67-7
- **C.M. KECK.** Moderne Pharmazeutische Technologie. Freie Universität, 2009
- *QUANTACHROME PARTIKELWELT,* Juni 2007, 1-16
- *CHEMICAL ABSTRACTS,* 98460-24-3
- *CHEMICAL ABSTRACTS,* 8013-07-8
- **SMITH ; MARCH.** March's Advanced Organic Chemistry. Wiley-Interscience, 2001
- **ULLMANN.** Enzyklopädie der Technischen Chemie. 1980, vol. 19, 280 ff
- *CHEMICAL ABSTRACTS,* 68664-06-2
- *CHEMICAL ABSTRACTS,* 1184-10-7
- *CHEMICAL ABSTRACTS,* 1203646-63-2
- *CHEMICAL ABSTRACTS,* 1078142-02-5
- *CHEMICAL ABSTRACTS,* 25134-01-4
- *CHEMICAL ABSTRACTS,* 1427364-85-9
- *CHEMICAL ABSTRACTS,* 639808-21-2
- *CHEMICAL ABSTRACTS,* 35074-77-2
- *CHEMICAL ABSTRACTS,* 6683-19-8

- *CHEMICAL ABSTRACTS,* 90498-90-1
- *CHEMICAL ABSTRACTS,* 154862-43-8
- *CHEMICAL ABSTRACTS,* 38613-77-3
- **THIELEN ; HARTWIG ; GUST.** Blasformen von Kunststoffhohlkörpern. Carl Hanser Verlag, 2006, 127-129
- *CHEMICAL ABSTRACTS,* 9002-84-0